# EUROPEAN PATENT APPLICATION

(11) **EP 4 568 381 A1**
(43) Date of publication of application: **11.06.2025**
(21) Application number: 23849353.0
(22) Date of filing: 31.07.2023
(51) Int. Cl.: H04W 72/04

(54) **REFERENCE SIGNAL SENDING METHOD AND APPARATUS, AND TERMINAL AND NETWORK-SIDE DEVICE**

(30) Priority: 04.08.2022 CN 202210935966
(71) Applicant: Vivo Mobile Communication Co., Ltd., Dongguan, Guangdong 523863 (CN)
(72) Inventor: WANG, Yuanyuan, Dongguan, Guangdong 523863 (CN); SI, Ye, Dongguan, Guangdong 523863 (CN); WU, Huaming, Dongguan, Guangdong 523863 (CN); LIU, Shixiao, Dongguan, Guangdong 523863 (CN)
(74) Representative: Michalski Hüttermann & Partner Patentanwälte mbB
(86) International application number: PCT/CN2023/110225
(87) International publication number: WO 2024/027646

(57) **Abstract**

This application discloses a reference signal sending method and apparatus, a terminal, and a network side device, and relates to the field of mobile communication. The reference signal sending method according to an embodiment of this application includes: A terminal obtains first information; and the terminal sends, on M first bandwidth parts, a sounding reference signal for positioning with frequency hopping based on the first information, where the frequency hopping includes N hops, each hop corresponds to a different narrowband, and M and N are positive integers.

## Description

### CROSS-REFERENCE TO RELATED APPLICATIONS

This application claims priority to Chinese patent application No. 202210935966.9, filed with the China National Intellectual Property Administration on August 4, 2022 and entitled "REFERENCE SIGNAL SENDING METHOD AND APPARATUS, TERMINAL, AND NETWORK SIDE DEVICE", which is incorporated herein by reference in its entirety.

### TECHNICAL FIELD

This application relates to the field of mobile communication technologies, and in particular, to a reference signal sending method and apparatus, a terminal, and a network side device.

### BACKGROUND

A reduced capability (Reduced Capability, RedCap) terminal (also referred to as a user equipment (User Equipment, UE)) should meet requirements for a low complexity and costs. The bandwidth characteristics of the RedCap UE are as follows: In a first frequency range (Frequency Range 1, FR1), the RedCap UE supports a 20 MHz bandwidth at most; and in a second frequency range FR2, the RedCap UE supports a 100 MHz bandwidth at most. An ordinary UE supports 100 MHz at most in the FR1 and 400 MHz at most in the FR2 in a general case.

It can be seen that the bandwidth supported by the RedCap UE is much smaller than the bandwidth supported by the ordinary UE. A bandwidth is an important factor affecting positioning accuracy. Generally, a larger bandwidth used to transmit a positioning reference signal indicates higher positioning accuracy. Therefore, for positioning of the RedCap UE, there is low positioning accuracy obtained by positioning in a case that the bandwidth is limited.

### SUMMARY

Embodiments of this application provide a reference signal sending method and apparatus, a terminal, and a network side device, to solve the problem of low positioning accuracy obtained by reference signal sending in a case that a bandwidth is limited.

According to a first aspect, a reference signal sending method is provided, and is applied to a terminal. The method includes:

A terminal obtains first information; and
the terminal sends, on M first bandwidth parts, a sounding reference signal for positioning with frequency hopping based on the first information, where the frequency hopping includes N hops, each hop corresponds to a different narrowband, and M and N are positive integers.

According to a second aspect, a reference signal sending apparatus is provided, including:
a receiving module, configured to obtain first information; and
a sending module, configured to send, on M first bandwidth parts, a sounding reference signal for positioning with frequency hopping based on the first information, where the frequency hopping includes N hops, each hop corresponds to a different narrowband, and M and N are positive integers.

According to a third aspect, a reference signal sending method is provided, and is applied to a network side device. The method includes:

A network side device obtains first information; and
the network side device measures, on M first bandwidth parts, a sounding reference signal for positioning with frequency hopping based on the first information to obtain a positioning measurement result of a terminal, where the frequency hopping includes N hops, each hop corresponds to a different narrowband, and M and N are positive integers.

According to a fourth aspect, a reference signal sending apparatus is provided, including:
an obtaining module, configured to obtain first information; and
a measurement module, configured to measure, on M first bandwidth parts, a sounding reference signal for positioning with frequency hopping based on the first information to obtain a positioning measurement result of a terminal, where the frequency hopping includes N hops, each hop corresponds to a different narrowband, and M and N are positive integers.

According to a fifth aspect, a terminal is provided. The terminal includes a processor and a memory. The memory stores a program or instructions runnable on the processor, and the program or instructions, when executed by the processor, implement the steps of the method according to the first aspect.

According to a sixth aspect, a terminal is provided, including a processor and a communication interface, where the communication interface is configured to obtain first information, and send, on M first bandwidth parts, a sounding reference signal for positioning with frequency hopping based on the first information.

According to a seventh aspect, a network side device is provided. The network side device includes a processor and a memory. The memory stores a program or instructions runnable on the processor, and the program or instructions, when executed by the processor, the steps of the method according to the first aspect.

According to an eighth aspect, a network side device is provided, including a processor and a communication interface, where the processor is configured to obtain first information, and the communication interface is configured to measure, on M first bandwidth parts, a sounding reference signal for positioning with frequency hopping based on the first information to obtain a positioning measurement result of a terminal.

According to a ninth aspect, a reference signal sending system is provided, including: a terminal and a network side device. The terminal may be configured to perform the steps of the reference signal sending method according to the first aspect. The network side device may be configured to perform the steps of the reference signal sending method according to the third aspect.

According to a tenth aspect, a readable storage medium is provided. The readable storage medium stores a program or instructions. The program or instructions, when executed by a processor, implement the steps of the method according to the first aspect, or the steps of the method according to the third aspect.

According to an eleventh aspect, a chip is provided. The chip includes a processor and a communication interface. The communication interface is coupled to the processor. The processor is configured to run a program or instructions to implement the method according to the first aspect, or implement the method according to the third aspect.

According to a twelfth aspect, a computer program/program product is provided. The computer program/program product is stored in a storage medium. The computer program/program product is executed by at least one processor to implement the steps of the reference signal sending method according to the first aspect or the reference signal sending method according to the third aspect.

In embodiments of this application, the sounding reference signal for positioning is sent on the M first bandwidth parts with frequency hopping based on the obtained first information, so that an effective bandwidth for the sounding reference signal can be increased and accuracy of positioning measurement can be improved.

### BRIEF DESCRIPTION OF THE DRAWINGS

FIG. 1 is a schematic diagram of a structure of a wireless communication system to which an embodiment of this application is applicable;
FIG. 2 is a schematic flowchart of a reference signal sending method according to an embodiment of this application;
FIG. 3 is a schematic time-frequency diagram of a reference signal sending method according to an embodiment of this application;
FIG. 4 is a schematic time-frequency diagram of another reference signal sending method according to an embodiment of this application;
FIG. 5 is a schematic time-frequency diagram of still another reference signal sending method according to an embodiment of this application;
FIG. 6 is a schematic time-frequency diagram of yet another reference signal sending method according to an embodiment of this application;
FIG. 7 is a schematic time-frequency diagram of still yet another reference signal sending method according to an embodiment of this application;
FIG. 8 is a schematic time-frequency diagram of a further reference signal sending method according to an embodiment of this application;
FIG. 9 is a schematic time-frequency diagram of a still further reference signal sending method according to an embodiment of this application;
FIG. 10 is a schematic time-frequency diagram of a yet further reference signal sending method according to an embodiment of this application;
FIG. 11 is a schematic time-frequency diagram of a still yet further reference signal sending method according to an embodiment of this application;
FIG. 12 is a schematic time-frequency diagram of an even yet another reference signal sending method according to an embodiment of this application;
FIG. 13 is a schematic time-frequency diagram of a still even yet another reference signal sending method according to an embodiment of this application;
FIG. 14 is a schematic time-frequency diagram of a still even yet further reference signal sending method according to an embodiment of this application;
FIG. 15 is a schematic time-frequency diagram of a still further even yet another reference signal sending method according to an embodiment of this application;
FIG. 16 is a schematic time-frequency diagram of a still even further reference signal sending method according to an embodiment of this application;
FIG. 17 is a schematic time-frequency diagram of a still even yet further reference signal sending method according to an embodiment of this application;
FIG. 18 is a schematic time-frequency diagram of a still even yet another further reference signal sending method according to an embodiment of this application;
FIG. 19 is a schematic diagram of a structure of a reference signal sending apparatus according to an embodiment of this application;
FIG. 20 is a schematic flowchart of another reference signal sending method according to an embodiment of this application;
FIG. 21 is a schematic diagram of a structure of another reference signal sending apparatus according to an embodiment of this application;
FIG. 22 is a schematic diagram of a structure of a communication device according to an embodiment of this application;
FIG. 23 is a schematic diagram of a structure of a terminal according to an embodiment of this application; and
FIG. 24 is a schematic diagram of a structure of a network side device according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in the specification and claims of this application are intended to distinguish between similar objects, but are not intended to describe a specific sequence or order. It should be understood that the terms used in such a way may be interchanged under appropriate circumstances so that the embodiments of this application can be implemented in an order other than those illustrated or described herein, the objects distinguished by "first" and "second" are usually of one type, and the number of objects is not limited. For example, one or more first objects may be provided. In addition, "and/or" in the specification and the claims indicates at least one of connected objects, and the character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single-carrier Frequency Division Multiple Access, SC-FDMA), and other systems. The terms "system" and "network" in the embodiments of this application are often used interchangeably, and the described technology can be applied to the systems and radio technologies mentioned above, and can be also applied to other systems and radio technologies. The following description describes a new radio (New Radio, NR) system for example purposes, and NR terms are used in most of the following descriptions, but these technologies can be also applied to applications other than NR system applications, such as 6th generation (6^{th} Generation, 6G) communication systems.

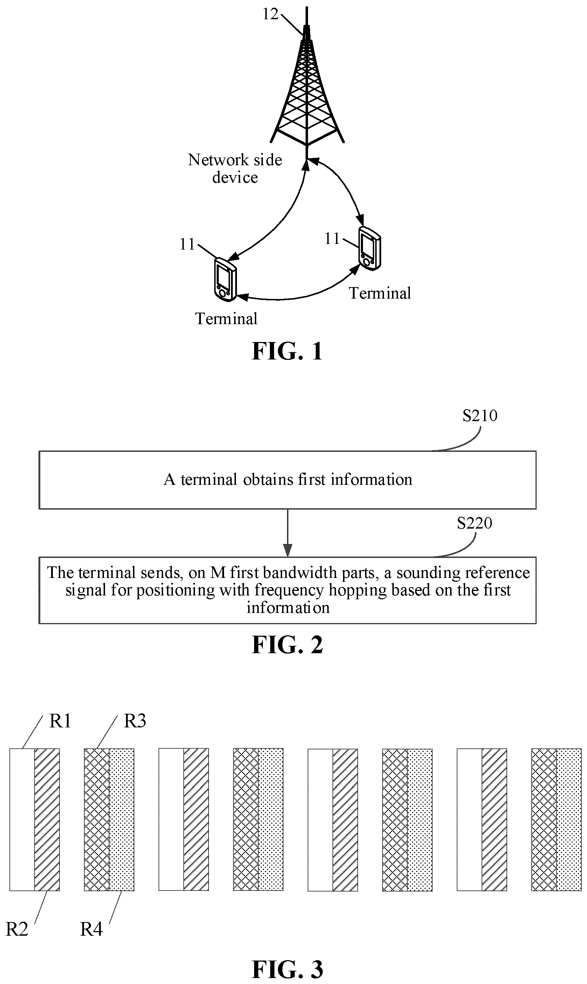

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a household device with a wireless communication function, such as a refrigerator, a television, a washing machine or furniture), a game console, a personal computer (personal computer, PC), an automated teller machine or a self-service machine or other terminal-side devices. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. It should be noted that a specific type of the terminal 11 is not limited in the embodiment of this application. The network side device 12 may include an access network device or a core network device, where the access network device may also be referred to as a radio access network device, a radio access network (Radio Access Network, RAN), a radio access network function or a radio access network unit. The access network device may include a base station, a wireless local area network (Wireless Local Area Network, WLAN) access point or a WiFi node, or the like. The base station may be referred to as a Node B, an evolved Node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other appropriate term in the field. As long as the same technical effect is achieved, the base station is not limited to a specific technical vocabulary. It should be noted that in the embodiment of this application, only a base station in an NR system is described as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF) location server, a location management function (Location Management Function, LMF), an evolved serving mobile location center (Evolved Serving Mobile Location Center, E-SMLC), and the like. It should be noted that in the embodiment of this application, only a core network device in an NR system is described as an example, and a specific type of the core network device is not limited.

A reference signal sending method and apparatus, a terminal, and a network side device according to embodiments of this application are described in detail below by some embodiments and application scenarios thereof with reference to the accompanying drawings.

As shown in FIG. 2, an embodiment of this application provides a reference signal sending method, and an execution body of the method is a terminal. In other words, the method may be performed by software or hardware installed on the terminal.

S210: A terminal obtains first information.

It should be noted that in an optional embodiment, the terminal is a RedCap UE.

To solve the problem that a bandwidth of the terminal is limited, the embodiment of this application proposes frequency hopping for sending to increase an effective bandwidth of positioning. When sending a sounding reference signal (Sounding Reference Signal, SRS) for positioning, the terminal uses frequency hopping (Frequency Hopping) for sending, and each hop corresponds to a different narrowband (also referred to as a subband (subband)), to send the SRS on a plurality of narrowbands. The network side device receives the SRS on the plurality of narrowbands at different times, and performs SRS measurement, to obtain a narrowband positioning measurement result or a positioning measurement result of the plurality of narrowbands after joint processing, which is equivalent to increasing the effective bandwidth for the SRS.

Optionally, in an embodiment, when sending a sounding reference signal for positioning, the terminal uses frequency hopping for sending, each hop corresponds to a different narrowband (also referred to as a subband), and the SRS needs to be sent on a plurality of narrowbands within a first time range. Optionally, the first time range may be Tms, or a time window. This is because a longer time gap between sending on the plurality of narrowbands indicates higher difficulty in joint processing with reference to the plurality of narrowbands to obtain a corresponding gain.

Optionally, a reference signal that can be used for positioning measurement, for example, a sounding reference signal, a reference signals for sidelink (Sidelink, SL) positioning, or another reference signal for positioning, may be set based on actual requirements. For simplicity, an SRS is taken as an example in the following embodiments for illustration.

The first information obtained by the terminal may include at least one of the following:
frequency hopping information for indicating the frequency hopping, where the frequency hopping information is used to indicate the frequency hopping of the terminal;
first indication information, where the first indication information is used to indicate configuration information of L first bandwidth parts (Bandwidth Parts, BWPs), where L is a positive integer greater than or equal to M; and
first activation information. The first activation information is used to indicate at least one of activation information of the M first bandwidth parts. For example, the first activation information may be used to indicate at least one of a switching time for switching from a BWP, such as a normal BWP (normal BWP) to a first BWP, activation duration of the first BWP, indication information of M activated first BWPs, activation time information of the M activated first BWPs, and the like.

The first BWP is a BWP that differs from the normal BWP, and may also be referred to as a virtual BWP or an enhanced BWP (additional BWP).

All or part of the first information can be obtained through at least one of a protocol agreement, a network side configuration, selection by the terminal, and other manners.

It should be noted that all or part of content in the frequency hopping information can be obtained from a related configuration of the first BWP, and all or part of a configuration of the first BWP can alternatively be obtained from the frequency hopping information. It can be seen that in the process of obtaining the first information, the first information can be obtained in an explicit or implicit manner, and part of content is indicated by default.

For example, the network side device may configure and determine related configurations of the M first BWPs based on optional frequency hopping information sent by, for example, a location management function (Location Management Function, LMF).

S220: The terminal sends, on M first BWPs, a sounding reference signal for positioning with frequency hopping based on the first information, where the frequency hopping includes N hops (Hops), each hop corresponds to a different narrowband, and M and N are positive integers.

Based on the first information, the terminal may determine a first BWP, time domain location information, frequency domain position information, and the like corresponding to each hop with frequency hopping when sending the SRS, to determine whether to perform corresponding BWP switching and send the SRS on the first BWP. Correspondingly, based on the first information, the network side device receives, at different times, the SRS hopping on the plurality of narrowbands, and performs SRS measurement, to obtain a narrowband positioning measurement result or a positioning measurement result of the plurality of narrowbands after joint processing.

Optionally, in an embodiment, the terminal determines the M first BWPs based on frequency hopping information (such as the number of frequency hopping), and then sends the reference signal on the first BWPs.

Optionally, in an embodiment, a terminal device is preconfigured with L first BWPs, and the terminal may activate the M first BWPs based on the first information, and then send the reference signal on the M first BWPs. Optionally, L > M.

Optionally, the preconfiguration of the first BWPs in the above-mentioned embodiment may be implemented in the following manner: The network side device (such as an LMF or a base station) is preconfigured with frequency hopping information of optional N1 hops, and the network side device is preconfigured with L first BWPs based on the frequency hopping information of the L1 hops.

Optionally, the terminal sends, on the M first BWPs, a sounding reference signal for positioning based on configuration information of the L first BWPs. In this case, L = M.

Optionally, the terminal sends, on the M first BWPs, a sounding reference signal for positioning based on activation information of the M first BWPs.

Optionally, the terminal sends, on the M first BWPs, a sounding reference signal for positioning based on the frequency hopping information and/or configuration information and/or the activation information of the M first BWPs.

As can be seen from the technical solution of the above-mentioned embodiment, in the embodiment of this application, the sounding reference signal for positioning is sent on the M first BWPs with frequency hopping based on the obtained first information, so that an effective bandwidth for the SRS can be increased and accuracy of positioning measurement can be improved.

Based on the above-mentioned embodiment, a corresponding relationship between the M first BWPs and the N hops for the frequency hopping may be set based on actual requirements. In an implementation, a plurality of first BWPs correspond to multiple hops, that is, each first BWP corresponds to one hop or each first BWP corresponds to one narrowband, for example, M = N. In an optional implementation, the number of preconfigured first BWPs is L, L is greater than or equal to M, and/or L is greater than or equal to N. M first BWPs are selected from the L preconfigured first BWPs to transmit the sounding reference signal on the N hops.

In a case that the plurality of first BWPs correspond to multiple hops, the first indication information includes at least one of the following:
second indication information, where the second indication information is used to indicate an enabling state of the L first BWPs, that is, to determine whether the M first BWPs may be configured for SRS frequency hopping (SRS Hop) transmission, and if the M first BWPs are within a first BWP set, the second indication information may also be used to indicate an enabling state of the first BWP set;
BWP types of the L first BWPs, for example, a fixed frequency hopping location type and a fixed frequency domain location type, and for another example, BWP indication information exclusive to a sounding reference signal for positioning and BWP indication information exclusive to frequency hopping;
monitoring information of the L first BWPs, where the monitoring information may include a cell for monitoring the first BWPs (BWP monitor cell) or BWPs that the first BWPs pertain to, for example, information related to monitoring the first BWPs under an initial BWP (initial BWP), a RedCap initial BWP (RedCap initial BWP) or a normal BWP based on a protocol indication, which may include indication information or switching information of the first BWPs; and
set information of a first BWP set including the L first BWPs. Optionally, in an embodiment, Z first BWP sets are included, and optionally, Z = 1 or Z > 1. The first BWP set includes M1 first BWPs. That is, a plurality of first BWP sets for SRS frequency hopping transmission may be configured. Different first BWP sets may include a same number or different numbers of first BWPs.

Optionally, the set information of the first BWP set includes at least one of the following:
a set identifier of the first BWP set;
the number of the first BWPs, for example, M1, where optionally, in an embodiment, M1 is equal to M;
a BWP identifier (BWP ID) of each first BWP; and
configuration information of the M first BWPs. It can be understood that M can be understood as a number thereof in the first BWP set, or can be understood as a number M thereof actually used for SRS frequency hopping transmission.

Optionally, the configuration information of the M first BWPs includes at least one of the following:
frequency domain position information of the M first BWPs, which may be frequency domain position information of the first BWP set;
bandwidth information of the M first BWPs, which may be bandwidth information of the first BWP set;
an overlapping bandwidth between the M first BWPs, which may be an overlapping bandwidth between first BWPs in the first BWP set;
BWP identification of each first BWP;
frequency domain position information of each first BWP; and
bandwidth information of each first BWP.

Optionally, in an embodiment, the configuration information of the M first BWPs includes common configuration information of the M first BWPs and configuration information exclusive to each first BWP. The common configuration information of the M first BWPs includes at least one of a point A, a frequency domain common offset relative to a cell, a subcarrier spacing (Subcarrier Spacing, SCS), a bandwidth, a cyclic prefix (Cyclic prefix, CP), SRS configuration information, and the like. The configuration information exclusive to each first BWP includes at least one of BWP identifier information, frequency domain position information of each first BWP, and the like.

In another implementation, a corresponding relationship between the M first BWPs and the N hops for the frequency hopping may alternatively be that one first BWP corresponds to multiple hops, for example, M = 1, the first BWP corresponds to N hops, and each hop corresponds to a different narrowband on the first BWP. That is, the terminal sends, on one first BWP, a sounding reference signal for positioning with frequency hopping based on the first information.

Optionally, in an implementation, the number of SRS frequency hopping transmissions that can be performed on one first BWP may be 1 or N. For example, the terminal may select one first BWP from a plurality of preconfigured first BWPs to perform SRS frequency hopping transmission.

Optionally, in a case that the first BWP corresponds to multiple hops, the first indication information includes at least one of the following:
third indication information, where the third indication information is used to indicate an enabling state of the first BWP, that is, to determine whether the first BWP may be configured for SRS frequency hopping transmission, and/or is used to indicate whether the first BWP may be configured for SRS frequency hopping transmission for N times;
a BWP type of the first BWP;
monitoring information of the first BWP;
a BWP identifier of the first BWP;
frequency domain position information and/or bandwidth information of the first BWP; and
configuration information of the multiple hops corresponding to the first BWP.

Optionally, the configuration information of the multiple hops corresponding to the first BWP includes at least one of the following:
frequency domain position information and/or bandwidth information of each of the multiple hops corresponding to the first BWP;
common frequency domain position information of the multiple hops corresponding to the first BWP;
a frequency domain position offset between adjacent hops in frequency domain among the multiple hops corresponding to the first BWP;
an overlapping bandwidth between adjacent hops in frequency domain among the multiple hops corresponding to the first BWP; and
the number of the multiple hops corresponding to the first BWP.

Optionally, the frequency domain position information of each of the hops corresponding to the first BWP includes at least one of the following:
a frequency domain position of each of the multiple hops corresponding to the first BWP; and
a relative frequency domain position of each of the multiple hops corresponding to the first BWP, which corresponds to a common frequency domain position of the first BWP referred to by the corresponding common frequency domain position information, where the frequency domain position of each of the multiple hops corresponding to the first BWP is: common frequency domain position + relative frequency domain position, or the frequency domain position of each of the multiple hops corresponding to the first BWP is: common frequency domain position + relative frequency domain position - 1.

Optionally, in an implementation, the configuration information of the multiple hops corresponding to the first BWP may include bandwidth information and overlapping bandwidth information of each of the multiple hops corresponding to the first BWP. The frequency domain position of each hop performed by the terminal may be calculated based on the above information. For example, the frequency domain position of the first hop: common frequency domain position; the frequency domain position of the second hop: common frequency domain position + hop associated bandwidth information - overlapping bandwidth information, and a bandwidth of the third hop: common frequency domain position + bandwidth information of the hop * 2 - overlapping bandwidth information. It should be noted that when the frequency domain position is calculated based on bandwidth information, the bandwidth information may be the number of resource block (Resource Blocks, RBs), the number of resource elements (Resource Elements, REs), or MHz. A unit of the bandwidth information may need to be converted into a unit of the frequency domain position, such as the number of RBs.

Optionally, in an implementation, the configuration information of the multiple hops corresponding to the first BWP may include the number of the multiple hops corresponding to the first BWP, a total bandwidth of the multiple hops, and overlapping bandwidth information. Each hop performed by the terminal may be calculated based on the above information. For example, the frequency domain position of the first hop: common frequency domain position; and the frequency domain position of the second hop: common frequency domain position + total bandwidth information / number of hops. The frequency domain position of the second hop: common frequency domain position + total bandwidth information / number of hops * 2. It should be noted that when the frequency domain position is calculated based on bandwidth information, the bandwidth information may be the number of RBs, the number of REs, or MHz. A unit of the bandwidth information may need to be converted into a unit of the frequency domain position, such as the number of RBs.

Optionally, to align all the above frequency domain positions, a constant may need to be subtracted. If constant position addition and subtraction are also included in this solution, for example, the frequency domain position of the second hop is: common frequency domain position + total bandwidth information / number of hops - constant C.

Optionally, in an implementation, the first indication information includes L types of configuration information of multiple hops corresponding to the first BWP, the first BWP may be configured for SRS frequency hopping transmission based on any configuration, and the L types of configuration information may be configured to obtain different configuration information of the multiple hops corresponding to the first BWP. That is, the first indication information includes L types of configuration information of the multiple hops corresponding to one first BWP, and each type includes identification information and configuration information of the multiple hops.

Optionally, the frequency domain position information and/or bandwidth information of each of the multiple hops corresponding to the first BWP satisfies at least one of the following:
frequency domain positions of each of the multiple hops corresponding to the first BWP are the same or different;
bandwidth of each hop among the multiple hops corresponding to the first BWP is the same;
a minimum frequency domain offset between adjacent hops in frequency domain among the multiple hops corresponding to the first BWP is the same;
a frequency domain offset between adjacent hops in frequency domain among the multiple hops corresponding to the first BWP is the same;
a bandwidth corresponding to the first BWP is less than or equal to a first bandwidth threshold, or less than or equal to a second bandwidth threshold, where the first bandwidth threshold is greater than the second bandwidth threshold;
the bandwidth of each of the multiple hops correspond to the first BWP is less than or equal to the second bandwidth threshold, where taking an example in which the first bandwidth threshold is 100 M and the second bandwidth threshold is 20 M, for example, the maximum bandwidth of the first BWP is 100 M, and the maximum bandwidth of each of the multiple hops corresponding to the first BWP is 20 M, or for another example, the maximum bandwidth of the first BWP is 20 M, and the maximum bandwidth of each of the multiple hops corresponding to the first BWP is 20 M; and
a total bandwidth of the multiple hops corresponding to the first BWP is less than or equal to the first bandwidth threshold.

In an implementation, a plurality of BWP states (BWP states), such as M BWP states, may be set for the first BWP, and configuration information of the first BWP in each BWP state may be set. The multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

In an implementation, a plurality of BWP state groups, such as L BWP state groups, may be set for the first BWP, and each group includes M BWP states. Configuration information of the BWP state groups is set. The configuration information of the BWP state groups includes common configuration information of the M BWP states and/or configuration information in each BWP state. Optionally, if the terminal indicates a state group of the first BWP, it means that the M BWP states in the state group are activated for SRS frequency hopping transmission. The multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

Optionally, the state information of each BWP state may include at least one of the following:
frequency domain position information and/or bandwidth information of each BWP state, where each BWP state is associated with a different frequency domain position and a same bandwidth, or each BWP state may be associated with a different frequency domain position and a different bandwidth; and
common frequency domain position information and/or same bandwidth information of each BWP state, that is, same frequency domain position information and/or bandwidth information set for each BWP state. In addition, one relative frequency domain position is additionally associated for each BWP state, and is used to indicate that the frequency domain position corresponding to each BWP state is: common frequency domain position + relative frequency domain position.

Optionally, the frequency domain position information and/or bandwidth information of each BWP state satisfies at least one of the following:
frequency domain positions corresponding to each BWP state are the same or different;
bandwidths corresponding to each BWP state are the same;
a minimum frequency domain offset between BWP states adjacent in frequency domain position is the same; and
a frequency domain offset between BWP states adjacent in frequency domain position is the same.

Optionally, a bandwidth corresponding to the first BWP is less than or equal to a first bandwidth threshold, or less than or equal to a second bandwidth threshold, a bandwidth associated with each BWP state is less than or equal to the second bandwidth threshold; and a total bandwidth associated with all BWP states is less than or equal to the first bandwidth threshold. For example, the maximum bandwidth of the first BWP is 100 M, and the maximum bandwidth associated with each BWP state is 20 M, or for another example, the maximum bandwidth of the first BWP is 20 M, and the maximum bandwidth associated with the BWP state is 20 M. Herein, the total bandwidth associated with all the BWP states is less than or equal to 100 M.

Optionally, in a case that each BWP state corresponds to multiple hops, state information of the BWP state includes at least one of a frequency domain offset or bandwidth information of the BWP state,
where the frequency domain offset is use to indicate a frequency domain offset of the first BWP between the multiple hops corresponding to a first BWP state; and
the bandwidth information is used to indicate bandwidth information of the first BWP corresponding to the multiple hops in the first BWP state.

For simplicity, in the following embodiments, an example in which each BWP state corresponds to one hop is taken for illustration.

In another implementation, a corresponding relationship between the M first BWPs and the N hops for the frequency hopping may alternatively be a mixed mode in which one first BWP corresponds to one hop and one first BWP corresponds to multiple hops.

For simplicity, the first BWP in the following embodiments may be expressed as a first BWP in a case that a plurality of first BWPs correspond to multiple hops, or as a first BWP in a BWP state in a case that one first BWP corresponds to multiple hops, and M first BWPs are expressed as first BWPs in M BWP states.

Optionally, the terminal performs or does not perform one or more of the following operations on the M first BWPs:
skipping performing synchronization signal and PBCH block (Synchronization Signal and PBCH Block, SSB) measurement;
monitoring downlink paging (paging);
skipping monitoring downlink paging;
skipping sending a preamble (preamble);
skipping sending information A (Msg A);
skipping transmitting on a physical uplink control channel (Physical Uplink Control Channel, PUCCH);
skipping transmitting on a physical uplink shared channel (Physical Uplink Shared Channel, PUSCH); and
transmitting a sounding reference signal.

Optionally, in a case that the first information includes frequency hopping information, the frequency hopping information includes at least one of the following:
a number N of the hops for the frequency hopping;
a hop identifier (Hop Identity, Hop ID), where the hop identifier is used to indicate the hops for the frequency hopping;
a BWP identifier, where the BWP identifier is used to indicate the first BWP, that is, the terminal may send an SRS on the first BWP indicated by the BWP identifier, or send an SRS based on configuration information of an SRS associated with the first BWP indicated by the BWP identifier;
a state identifier (state ID), where the state identifier is used to indicate the BWP state, and the BWP state is a state of the first BWP, that is, the terminal may send an SRS when the first BWP is in the BWP state corresponding to the state identifier, or may send an SRS based on the configuration information of an SRS associated with the BWP state;
first frequency domain position information, where the first frequency domain position information is used to indicate a frequency domain position of each hop;
first time domain location information, where the first time domain location information is used to indicate a time domain location of each hop;
second time domain location information, where the second time domain location information is used to indicate a time domain location of the first hop;
a first period, where the first period is a period of the hops for the frequency hopping; and
first repetition configuration information, where the first repetition configuration information is used to indicate a repetition configuration of the hops for the frequency hopping.

The number N of the hops may be specifically used to indicate a number N of frequency hopping when the terminal sends an SRS with frequency hopping, or to indicate a total number of frequency points for switching the first BWP when the SRS is sent, and may be specifically the number of first BWPs or the number of BWP states of the first BWPs.

Optionally, the number N of the hops is the number of narrowbands, and the number of hops may also be used to indicate the number of narrowbands when the terminal sends an SRS. The terminal sends the SRS with frequency hopping among the N narrowbands.

The number N of the hops may be 2, 4, 8, or the like.

The number N of the hops can be obtained by at least one of a protocol agreement, a network configuration, and selection by the terminal.

Optionally, a numerical value of the hop identifier may be set based on actual requirements, and is, for example, 0 to N-1.

Optionally, a hop indicated by the Hop ID being 0 is the first hop for frequency hopping, or a hop with a lowest frequency domain position.

Optionally, Hop IDs are sequentially arranged in ascending order to indicate a time sequence of the Hops, or a Hop sequence with frequency domain positions in ascending order.

Optionally, there is no overlap in time domain location between different hops.

Optionally, that there is no overlap in time domain location between different hops specifically includes that a time domain gap between different hops is greater than a first time threshold, and the first time threshold is N1 symbols (symbols) or N2 slots (slots).

Optionally, there is partial overlap in the frequency domain positions between the different hops.

Optionally, the first frequency domain position information in the frequency hopping information may include at least one of the following:
a bandwidth of each hop;
an initial frequency domain position of each hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, in a case that the frequency hopping information is determined by a related configuration of first BWPs, the bandwidth and/or the initial frequency domain position of the hop may be determined by the bandwidth and/or the initial frequency domain position of a first BWP corresponding to the hop. In this case, the bandwidth and/or the initial frequency domain position of the hop may be indicated by default, and is indicated by a corresponding first BWP or a corresponding BWP state.

Optionally, in a case that the frequency hopping information is determined by a related configuration of first BWPs, the frequency hopping information is indicated in configuration information of the SRS, and the terminal determines frequency hopping on the first BWPs with reference to configuration information of the first BWPs and the SRS. For example, the SRS is configured with frequency hopping for the terminal to send the SRS, such as intra-slot frequency hopping and frequency hopping times of 2. The terminal performs intra-slot frequency hopping twice on a first BWP based on the configuration of the SRS. For another example, if the terminal is configured with an SRS bandwidth of 64 RB and a frequency hopping offset of 5 RB, the terminal performs frequency hopping at an offset of 64 RB between adjacent hops on the first BWP based on the configuration of the SRS. For another example, if the terminal is configured with inter-slot frequency hopping and frequency hopping times of Z, the terminal performs inter-slot frequency hopping on the first BWP.

In an implementation, the bandwidth and/or the initial frequency domain position of the hop is the bandwidth and/or the initial frequency domain position of the first BWP corresponding to the hop.

In another implementation, the initial frequency domain position of the hop is determined relative to the initial frequency domain position of the first BWP corresponding to the hop.

In another implementation, the initial frequency domain position of the hop is determined relative to the initial frequency domain position of the first BWP corresponding to the hop. The frequency hopping is, for example, at least one of intra-slot frequency hopping, inter-slot frequency hopping, frequency hopping times, an overlapping bandwidth between adjacent hops, frequency hopping bandwidth, and the like, and is determined with frequency hopping indication information of the SRS.

Optionally, in a case that a related configuration of first BWPs is determined by the frequency hopping information, the bandwidth and/or the initial frequency domain position of the hop may be determined by at least one of the following:
joint coding information representation of the bandwidth and/or the initial frequency domain position of the hop, for example, a resource indication value (Resource indicator value, RIV);
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the initial frequency domain position of the hop may be a frequency domain position of an initial physical resource block (Physical Resource Block, PRB).

Optionally, the bandwidth and/or the initial frequency domain position of each hop satisfies at least one of the following:
a frequency domain offset between initial frequency domain positions of adjacent hops in frequency domain is the same;
an initial frequency domain position of the hop with a lowest frequency domain position is the same as an initial frequency domain position of the sounding reference signal; and
bandwidths of different hops are the same.

Optionally, the initial frequency domain position of the hop is a relative offset relative to a frequency domain reference point.

The frequency domain reference point includes at least one of the following:
an initial frequency domain position of the sounding reference signal, or an initial frequency domain position of a currently measured positioning frequency layer, for example, a cell (cell) identifier, a cell frequency domain, and a BWP identifier;
a frequency domain position of a reference point A (Point A) of the sounding reference signal;
a frequency domain position of a reference point A in a serving cell (serving cell);
a frequency domain position of an offset of the reference point A (offset to Point A) in the serving cell;
an initial frequency domain position or a highest frequency domain position of the hop with a lowest frequency domain position;
an initial frequency domain position of the first hop, or a highest frequency domain position of a previous hop, such as a highest PRB;
an initial frequency domain position of the previous hop, or a highest frequency domain position of the previous hop, such as the highest PRB; and
an initial frequency domain position of a first BWP corresponding to the hop.

Optionally, a subcarrier spacing associated with the offset of the reference point A is consistent with a currently activated BWP (active BWP) or with a subcarrier spacing of the sounding reference signal.

Optionally, the subcarrier spacing associated with the offset of the reference point A is determined by a protocol agreement or a network side configuration (preconfiguration).

Optionally, a frequency domain offset between initial frequency domain positions of adjacent hops in frequency domain is the same. In an implementation, an initial frequency domain position of each hop takes the initial frequency domain position of the hop with the lowest frequency domain position as a frequency domain reference point, and takes the above frequency domain offset as a granularity, and an offset of the initial frequency domain position of each hop relative to the frequency domain reference point is X * frequency domain offset. X and/or the frequency domain offset may be indicated by a network side. X may be the same as the Hop ID.

In another implementation, an initial frequency domain position of each hop takes the initial frequency domain position of the first hop as a frequency domain reference point, and takes the above frequency domain offset as a granularity, and an offset of the initial frequency domain position of each hop relative to the frequency domain reference point is X * frequency domain offset. X and/or the frequency domain offset is indicated by a network. X may be the same as the Hop ID.

Optionally, the overlapping bandwidth may include an overlapping bandwidth overlapping an upper frequency domain position of the hop and an overlapping bandwidth overlapping a lower frequency domain position of the hop.

Optionally, the first time domain location information in the frequency hopping information includes at least one of the following:
a time domain location of each hop; and
a time domain location of a first hop,
where the time domain location includes at least one of the following:
a starting time domain location;
an ending time domain location; and
duration (Hop Duration) used to indicate a continuous time occupied with frequency hopping for once.

A unit of the first time domain location information may be at least one of symbol, slot, subframe (subframe), Ts, Tc, second (s), millisecond (ms), microsecond (us), and nanosecond (ns). When the unit is symbol or slot, an associated SCS is consistent with a BWP currently activated by the terminal. Ts = 1 / (15 k * 2048 s). Tc = 1 / (480 K * 4096) in NR is obtained based on a subcarrier spacing of 480 K as a basic time unit in NR, and sampling rate = number of sampling points * subcarrier spacing = 4096 * 15 K * 2^{u}.

In an implementation, that the first time domain location information is determined by time domain location information of the sounding reference signal specifically includes:
the first time domain location information is determined based on a slot offset (slot offset) or a starting time domain location of an aperiodic sounding reference signal,
   or
the first time domain location information is determined based on configuration information of a periodic or semi-static SRS, where the configuration information of the periodic or semi-static SRS includes at least one of the following:
a second period and offset indication information, where the second period is a period of the SRS;
a starting time domain location of the SRS, such as an initial symbol position; and
a length of the SRS.

Optionally, the first time domain location information is included in the configuration information of the SRS, such as a RRC message.

Optionally, the first time domain location information is included in a first indication field of a DCI, to indicate an offset of the SRS relative to the DCI and/or to indicate an offset of the first BWP relative to the DCI.

Optionally, the first time domain location information satisfies at least one of the following:
a time domain length of the hop is greater than a transmission time of an SRS corresponding to the hop, and the SRS may be an SRS resource (SRS Resource) or an SRS resource set (SRS Resource Set), or a slot or symbol of the hop corresponding to the SRS;
a starting time domain location of the hop is before a time at which the SRS corresponding to the hop is sent; and
the starting time domain location of the hop is before a first time gap (Ngap) corresponding to the hop, that is, it is desired to switch to the frequency domain position corresponding to the hop before the Ngap.

In another implementation, the time domain location information in the frequency hopping information is determined by activation information and/or configuration information of the first BWP, where the activation information and/or the configuration information of the first BWP includes at least one of the following:
a time domain location P1 of the first activation information;
a time domain location P2 of the first indication information;
a time domain gap that is between adjacent hops in time domain and that is indicated by the first indication information;
a first offset K1, where the first offset is an offset corresponding to the first activation information and/or the first indication information, for example, the starting time domain location of the first hop is P1 + K1 or P2 + K1; and
a second offset K2, where the second offset is an offset of first BWPs adjacent in time domain, such as an offset caused by sequentially activating a plurality of first BWPs or a plurality of BWP states of the first BWPs based on the first activation information, and switching between two adjacent first BWPs, or switching between two adjacent BWP states. For example, if the starting time domain location of the first hop is P1 + K1, a starting time domain location of the second hop is P1 + K1 + K2.

Optionally, the first time domain location information may alternatively be determined based on the activation information and/or the configuration information of the first BWP and the configuration of the SRS.

Each SRS (for example, each SRS resource, or all repetitions (repetitions) of one SRS, or SRSes of N periods) needs to perform N hops, but time domain locations of different SRSes are different.

Optionally, hop 0 of SRS 0 = time domain location X of SRS 0.

Optionally, hop1 of SRS 0 = X + K1.

In another implementation, the first time domain location information may be used to determine activation information or an activation length of the first BWP.

In another implementation, the first time domain location information may be used to determine the number of times that the first BWP is activated (such as the number of times of switching to the first BWP), an activation gap (such as a gap between two-time switching to the first BWP, or a gap from one of M first BWPs to the next one of the M first BWPs, or a gap from a BWP state of a first BWP to the next BWP state of the first BWP).

Optionally, duration of each hop in the first time domain location information may be further used to indicate duration corresponding to a first BWP or corresponding to a BWP state.

Optionally, duration of multiple hops is the same.

Optionally, duration of first BWPs or BWP states is the same.

Optionally, the time domain configuration information may not include duration of each hop. In this case, the duration of a Hop may start from a starting time domain location of the Hop and end a period of time before a starting time domain location of the next Hop adjacent in time domain. This period of time may be a switching time of adjacent Hops, and may be determined by at least one of a protocol agreement, a network side indication, or a UE capability.

Optionally, duration of a first BWP or a BWP state can also be understood as starting from a starting time domain location of the first BWP or the BWP state and ending a period of time before a starting time domain location of the next BWP or the next BWP state adjacent in time domain.

Optionally, the starting time domain location of the hop may be an offset or an absolute time relative to a time domain reference point.

The time domain reference point may be one of the following:
a time domain location of system frame number 0 (System frame number 0, SFN0) in a current serving cell, that is, timing based on the serving cell;
a time domain location of system frame number 0 of a reference signal time difference (Reference Signal Time Difference, RSTD) reference cell, that is, timing based on the RSTD reference cell;
a starting time domain location or an ending time domain location of a previous hop, such as a starting symbol, a starting slot, or a starting frame;
a starting time domain location or an ending time domain location of a first Hop; and
a starting time domain location of a first PRS.

Optionally, the starting time domain location of the first Hop is an offset or an absolute time relative to a time domain reference point.

Optionally, a relative time domain offset between multiple hops is the same, that is, the multiple hops have an equal gap therebetween. A UE may calculate a starting time domain location or an ending time domain location of each Hop based on the gap and the starting time domain location or the ending time domain location of the first Hop.

Optionally, starting time domain locations of adjacent hops in time domain have a same gap.

In an implementation, with the starting time domain location of the first Hop as a time domain reference point and the gap as a granularity, a time offset of the starting time domain location of each Hop relative to the time domain reference point is Y * gap. Y and/or the gap is indicated by a protocol agreement or the network side. Optionally, Y is the same as the Hop ID.

Optionally, the absolute time is, for example, a universal time coordinated (Universal Time Coordinated, UTC).

Optionally, the starting time domain location or the ending time domain location relative to the previous Hop is a starting time domain location or an ending time domain location of a repetition of the previous Hop, or a starting time domain location or an ending time domain location after all repetitions of the previous Hop are added up.

Optionally, the first period in the frequency hopping information is determined by one of the following manners:
a second period, where the second period is a period of the SRS; and
a third period, where the third period is a period of the first BWP.

In an implementation, the first period may be determined based on the second period.

In another implementation, the third period may be determined based on the first period.

In another implementation, the first period may be determined based on the third period.

Optionally, the first repetition configuration information in the frequency hopping information includes at least one of the following:
a first repetition count, where the first repetition count is used to indicate a repetition count of each hop in a second period or in a frequency hopping instance (instance), and the second period is a period of the SRS; and
a time domain gap (time gap) between adjacent repeated hops.

It should be noted that repeated hops have a same Hop ID and correspond to a same narrowband.

The repetition configuration of Hops can also be understood as a repetition configuration of the first BWP, and the first repetition configuration information may also be used to indicate at least one of the following:
a repetition count of the first BWP in the second period; and
a time domain gap between adjacent repeated first BWPs.

It should be noted that repeated first BWPs have a same BWP ID or state ID, and correspond to a same narrowband.

Optionally, multiple hops have a same repetition configuration.

Optionally, the first indication information or the first activation information includes time domain candidate window information, and the time domain candidate window information is used to indicate a candidate time domain location corresponding to each hop or each first BWP. This can ensure that the terminal completes the SRS frequency hopping transmission on the N hops in a time domain candidate window.

The time domain candidate window information includes at least one of the following:
duration;
a periodicity;
a starting time domain location;
a repetition configuration;
a BWP identifier of the first BWP;
a state identifier of a BWP state, where the BWP state is a state of the first BWP;
a first mapping mode, where the first mapping mode is used to indicate a mapping relationship between the hops for the frequency hopping and the first BWPs;
a second mapping model, where the first mapping mode is used to indicate a time domain mapping position of each hop under a time domain candidate window; and
a frequency hopping sequence of the first BWPs, which, in an implementation, may be a frequency hopping sequence of the M first BWPs.

In an implementation, in a case that a frequency domain position of each first BWP and/or a frequency domain position corresponding to each BWP state is fixed, flexibility of the configuration can be increased through time domain candidate window information included in the first indication information or the first activation information.

Optionally, a numerical value of the BWP identifier or state identifier may be set based on actual requirements, and is, for example, 0 to N-1.

Optionally, when a BWP identifier or state identifier is 0, it indicates a time domain candidate window earliest in time domain location.

Optionally, BWP identifiers or state identifiers are sequentially arranged in ascending order to indicate a time sequence of time domain candidate windows.

Optionally, the frequency hopping sequence of the first BWPs is determined by one of the following manners:
A1. Indicating adjacent first BWPs, including a BWP identifier indicating a previous or next first BWP of a current first BWP, or a state identifier indicating a previous or next BWP state of a current BWP state.
   The previous BWP identifier or state identifier is used to indicate being (or switching) from a specific first BWP or BWP state to the current first BWP; and the next BWP identifier or state identifier is used to indicate being (or switching) from the current first BWP or BWP state to the next first BWP or BWP state.
A2. An indicated frequency hopping sequence, which may include a frequency hopping sequence of first BWPs or BWP states. An indication manner of the frequency hopping sequence may include:
   indication through an identifier list (ID list), where an order of IDs in the ID list is an order of switching the first BWPs or BWP states; and
   Indication through an order in which information elements (Information elements, IEs) corresponding to different first BWPs or BWP states in the first BWP or BWP state switching list are arranged.
A3. A frequency hopping sequence agreed in a protocol.

In an implementation, the frequency hopping sequence of first BWPs or BWP states is related to the number of the first BWPs or the BWP states. The protocol stipulates the frequency hopping sequence in the case of different numbers.

In another implementation, the frequency hopping sequence of first BWPs or BWP states may be determined based on frequency domain positions, for example, in ascending order or descending order.

Optionally, the frequency hopping sequence of the first BWPs is a relative sequence or an absolute sequence.

In a case that the frequency hopping sequence is an absolute sequence, a first BWP or BWP state with a sequence being 1 indicates an initial first BWP or initial BWP state of the UE, and the first BWPs or BWP states are sequentially switched in the absolute sequence. In a case that the frequency hopping sequence is a relative sequence, a first BWP or BWP state with a sequence being 1 does not represent an initial first BWP or initial BWP state of the UE, but may start from any first BWP or BWP state, and then the first BWPs or BWP states are sequentially switched in the absolute sequence. Alternatively, based on the relative sequence, the UE can obtain a position of a previous/next first BWP or BWP state of a first BWP or BWP state.

Optionally, in a case that the frequency hopping sequence is a relative sequence, the switching sequence of the first BWPs or BWP states is a cyclic sequence.

For example, switching is performed between four first BWPs or BWP states, and the frequency hopping sequence is {0, 2, 3, 1}. If the UE starts frequency hopping from the first BWP or BWP state with an ID being 3, an actual frequency hopping sequence is {3, 1, 0, 2}. If the UE starts frequency hopping from the first BWP or BWP state with an ID being 1, an actual frequency hopping sequence is {1, 0, 2, 3}.

Optionally, the first activation information in the frequency hopping information further includes at least one of the following:
an indication of a first BWP corresponding to initial frequency hopping;
a first mapping mode, where the first mapping mode is used to indicate a mapping relationship between the hops for the frequency hopping and the first BWPs;
the number of activated first BWPs, which is used to indicate the number of activated first BWPs or BWP states, where all first BWPs or BWP states may be activated by default;
a frequency hopping sequence of the first BWPs, which, in an implementation, is a frequency hopping sequence of the M first BWPs, where a manner of determining the frequency hopping sequence of the first BWPs is as described in the above-mentioned embodiment, and details are not described herein; and
a list of the activated first BWPs, including identification information of the activated first BWPs or identification information of activated first BWP states.

Optionally, the indication of a first BWP corresponding to initial frequency hopping is used to indicate the terminal to start frequency hopping from the indicated first BWP or BWP state.

In an implementation, the first BWP corresponding to the initial frequency hopping may be indicated by a BWP ID.

In an implementation, all first BWPs or BWP states are activated by default. That is, starting from the indicated first BWP or BWP state, frequency hopping is performed among all the first BWPs or BWP states.

In an implementation, the UE can obtain an actual frequency hopping sequence based on the indication of the first BWP corresponding to initial frequency hopping, with reference to a protocol-predefined relative frequency hopping sequence or a relative frequency hopping sequence of the network side device.

The list of the activated first BWPs is used to indicate the activated first BWPs or BWP states, and the terminal may perform frequency hopping based on the activated first BWPs or BWP states.

Optionally, the list of the activated first BWPs may be expressed as an ID list of first BWPs, and each ID corresponds to one first BWP or BWP state.

Optionally, the ID list contains at least one first BWP or BWP state, and when only one first BWP is included, only one first BWP is activated.

Optionally, first activation or indication information may be carried by at least one of a radio resource control (Radio Resource Control, RRC) message, a medium access control control element (Medium Access Control Control Element, MAC CE) message, and a downlink control information (Downlink Control Information, DCI) message.

Optionally, the first activation information is further used to indicate switching from a currently activated BWP (active BWP or active DL BWP) to the first BWP.

Optionally, the switching from a currently activated BWP to the first BWP includes: switching from the currently activated BWP to a first BWP nearest in frequency domain position, or a first BWP indicated by the first activation information, or a first BWP determined by a protocol and agreement.

There may be a plurality of manners of determining the first BWP nearest in frequency domain position, and the embodiment of this application only provides a few determining conditions:
Condition 1. A first BWP with a maximum overlapping range is selected from first BWPs that overlap the currently activated BWP.
Condition 2. If there are a plurality of first BWPs selected based on condition 1, one is arbitrarily selected from the plurality of selected first BWPs, or a first BWP with a lowest or highest frequency domain position or an activated first BWP is selected from the plurality of selected first BWP.
Condition 3. If no first BWP is not selected based on condition 1, a first BWP whose center frequency is closest to that of the currently activated BWP is selected.
Condition 4. If there are a plurality of first BWPs selected based on condition 3, one is arbitrarily selected from the plurality of selected first BWPs, or a first BWP with a lowest or highest frequency domain position or an activated first BWP is selected from the plurality of selected first BWP.

Optionally, the first mapping mode includes at least one of the following:
a mapping rule between hops and first BWPs;
a mapping rule between the number of the hops and the first BWPs;
a mapping rule between a bandwidth and the first BWPs;
a mapping mode based on an association period (association period), where the association period is obtained from an association relationship between a second period and a third period, or from an association relationship between the second period and a first period, where the first period is a period of the hops for the frequency hopping, the second period is a period of the SRS, and the third period is a period of the first BWPs; and
a mapping mode based on resources and/or repetition information of the SRS.

Optionally, under the mapping rule based on the association period, a plurality of second periods are associated with one third period, or the plurality of second periods are associated with one first period. For example, the first BWP1 is in the first second period, and the first BWP2 is in the second second period. If there are four first BWPs to be switched, the association period is at least four times that of the second period. For example, the first hop is in the first second period, and the second hop is in the second second period. If the frequency hopping include 4 hops, the association period is at least four times that of the second period.

Optionally, in the association period, in a case that the first BWPs in the third period are discarded, or that the hops in the first period are discarded, so that an SRS cannot map to all first BWPs or all hops, the association period supports use of an extension manner, or the association period is discarded.

For example, if the second period is 10 ms and the frequency hopping includes 4 hops, the association period may include four second periods as described above, which are denoted as 10-10-10-10. If one hop is discarded in the next association period, a corresponding association period is denoted as 10-10-x-10-10, where x denotes the discarded hop and is not denoted in the association period. It can be seen that the mapping mode becomes 90 ms, which may cross a 1024SFN boundary. The extension manner should be used to extend 10-10-x-10-10 to 10-10-x-10-10-10-10-10, where the last three 10s are also-ran, with no mapping being performed.

Optionally, in the mapping mode based on resources and/or repetition information of the SRS, one second period is associated with a plurality of third periods or a plurality of first periods; and/or each SRS resource corresponds to a plurality of first BWPs. For example, if the number of hops is 2 and each resource has a plurality of symbols, the intra-slot (intra-slot) first BWP switching can be performed.

Optionally, the mapping mode based on resources and/or repetition information of the SRS includes: a mapping mode based on the number of symbols and/or the number of repetitions of the SRS resources.

Optionally, in a case that the number of repetitions is 1, the frequency hopping is intra-slot frequency hopping.

In an implementation, if the frequency hopping is only related to the number of symbols of the SRS resources, the frequency hopping can be understood as intra-slot frequency hopping.

For example, a number Ns of symbols occupied by the SRS resources may be configured as 1 to 14, and if the number of repetitions is R = 1, one symbol may indicate one hop. If a switching time of the first BWP is considered, the number of symbols of each hop may need to be greater than 1.

Optionally, in a case that a number R of repetitions is greater than 1, the number of intra-slot frequency hopping groups is one of:
a ratio of the number of symbols to the number of repetitions of the SRS resources, that is, number of frequency hopping groups = Ns / R;
a ratio of the number of symbols of the SRS resources to the number of symbols corresponding to each hop, that is, number of frequency hopping groups = Ns / number of symbols corresponding to each hop, where the number of symbols corresponding to each hop may be predefined by a protocol or preconfigured by the network side;
the number of repetitions, that is, number of frequency hopping groups = R; and
a product of the number of intra-slot frequency hopping groups and the number of repetitions, that is, the number of frequency hopping groups = number of intra-slot frequency hopping groups * R.

Optionally, the number of intra-slot frequency hopping groups may be 2, 4, or the like.

Optionally, the number of intra-slot frequency hopping groups may be predefined by a protocol, preconfigured by the network side, or indicated by the network side.

Optionally, the number of intra-slot frequency hopping groups = Ns / R.

Optionally, the number of intra-slot frequency hopping groups = Ns / number of symbols corresponding to each hop.

A switching time (switch time) between hops or between first BWPs for the frequency hopping, and a corresponding priority and collision rule.

Optionally, a time domain gap between adjacent hops in time domain is greater than or equal to a first gap threshold d,
or
a time domain gap between first BWPs adjacent in time domain is greater than or equal to the first gap threshold d,
where the first time gap may be a switching time between hops or between first BWPs, and the first gap threshold is determined by one of the following manners: a protocol agreement, a network side configuration, and a terminal capability.

Optionally, a unit of d is at least one of symbol, slot, subframe, Ts, Tc, s, ms, us, and ns.

Optionally, in a case that the unit of the first gap threshold is symbol or slot, an SCS associated with the first gap threshold is consistent with an SCS of at least one of the current following of the terminal:
a first BWP;
an activated BWP; and
an SRS.

Optionally, the terminal does not perform target communication behavior during frequency hopping switching by the terminal or under the first BWPs, where the target communication behavior includes at least one of the following:
receiving a downlink (Downlink, DL) signal and/or from a downlink channel; and
transmitting an uplink (Uplink, UL) signal and/or on an uplink channel.

A frequency hopping switching period t1 may include a time when a Hop is in progress, and a time before the Hop and/or a time after the Hop. A unit of t1 is at least one of symbol, slot, subframe, Ts, Tc, s, ms, us, and ns. When the unit is symbol or slot, an associated SCS is consistent with a current BWP or SRS of the terminal.

A period t2 under the first BWP may be an activation period of a first BWP or BWP state, and a time before and/or a time after activation of the first BWP or BWP state. A unit of t2 is at least one of symbol, slot, subframe, Ts, Tc, s, ms, us, and ns. When the unit is symbol or slot, an associated SCS is consistent with a current BWP or SRS of the terminal.

Optionally, during a period in which the terminal sends the sounding reference signal, during frequency hopping switching by the terminal, or under the first BWPs, the terminal sends no SRS or does not switch to the BWPs in a case that the terminal overlaps or collides with a downlink signal and/or a downlink channel, and/or overlaps or collides with an uplink signal and/or an uplink channel. The SRS transmission period is an entire transmission period including duration of multiple hops and a Hop switching time.

In an implementation, if duration and/or a Hop switching time of a Hop overlaps or collides with another DL signal or channel, and/or a UL signal or channel, the UE is not desired to switch to the Hop.

In another implementation, if duration, an activation period and/or a switching time of a first BWP overlaps or collides with another DL signal or channel, and/or a UL signal or channel, the UE is not desired to switch to the first BWP.

Optionally, during a period in which the terminal sends the SRS, during frequency hopping switching by the terminal, or under the first BWPs, the terminal sends no sounding reference signal, or does not switch to the first BWPs, or abandons a second period of the SRS to enter an association period, in a case that the terminal overlaps or collides with an SSB.

For example, the SRS period is 10 ms, and the number of hops is 4. In this case, 10-10-10-10 is the first association period, and then 10-10-x-10-10 should be the second period, but x may be excluded and not denoted into the second period of the association period due to overlapping or collision with an SSB.

The terminal cannot completely send the SRS on all hops or narrowbands. Optionally, for a same SRS resource, in a case that the terminal cannot send the SRS on at least one hop, the terminal discards SRS transmission on all hops, which can also be understood as discarding all SRS frequency hopping transmissions.

Optionally, for the same SRS resource, in a case that the terminal cannot send the SRS on a Hop, the terminal may continue to send the SRS on other hops.

Optionally, for the same SRS resource, in a case that different hops are associated with different Tx timing error groups (Tx Time Error Groups, TX TEGs), the terminal reports the Tx timing error groups,
where the Tx timing error groups are associated with at least one of the following:
a hop identifier;
a BWP identifier of the first BWP;
a state identifier of a state corresponding to the first BWP;
a frequency domain position; and
SRS identification information.

Optionally, before that a terminal obtains first information, the method further includes:
The terminal reports a frequency hopping related capability of the terminal, where the frequency hopping related capability of the terminal includes at least one of the following:
whether the terminal supports sending of the SRS for the frequency hopping;
a minimum time gap in switching time between two hops that are different or adjacent in time domain, which is used to indicate a time gap for the terminal to switch from a first BWP to the next first BWP;
a maximum bandwidth of one hop, which can also be understood as a maximum bandwidth of first BWPs, and may specifically include a maximum bandwidth of each first BWP and further include a maximum bandwidth of all first BWPs;
a maximum bandwidth of the terminal for the frequency hopping, which can also be understood as a sum of maximum bandwidths of all the first BWPs, that is, a sum of the bandwidths occupied by all the first BWPs together;
a maximum time gap between multiple hops, which can also be understood as a maximum time gap between a plurality of first BWPs, which, for example, starts from an i^{th} symbol of the first first BWP among a plurality of first BWPs and ends with an i^{th} symbol of the last first BWP among the plurality of first BWPs, where i is a positive integer predefined and preconfigured,
a maximum timing difference between the multiple hops, where the timing difference is used to indicate a synchronization relationship between the multiple hops, and the maximum timing difference is used to indicate a maximum value of a synchronization time difference between the multiple hops of the terminal, and can also be understood as a maximum timing difference between SRS transmission by the plurality of first BWPs; the timing difference is used to represent a timing synchronization relationship between the plurality of first BWPs, for example, a timing difference of 0 indicates synchronization, and a timing difference of not 0 indicates that the plurality of first BWPs are not synchronized or have a synchronization time difference; the maximum time difference is used to indicate a maximum value of the synchronization time difference between transmission on the plurality of first BWPs by the UE; and optionally, in a case that adjusting timing advance (TA), there may be a switching interruption of the first BWP, so that the network side device cannot jointly process the SRS on a plurality of narrowband;
a maximum phase difference between the multiple hops, which can also be understood as a maximum phase difference between transmission of the SRS on the plurality of first BWPs; and
a maximum frequency difference between the multiple hops, which can also be understood as a maximum frequency difference between the plurality of first BWPs,

Optionally, the frequency hopping related capability of the terminal includes a switching time of intra-band (intra-band) frequency hopping and/or a switching time of inter-band (inter-band) frequency hopping.

The switching time of the intra-band frequency hopping can also be understood as a switching time of intra-band first BWPs, which is used to indicate a switching time when two first BWPs are in a same band, a same carrier (Carrier), or a same control channel (Control Channel, CC).

The switching time of the inter-band frequency hopping can also be understood as a switching time of inter-band first BWPs, which is used to indicate a switching time when two first BWPs are in different bands, different carriers (Carriers), or different control channels (Control Channels, CCs).

The switching time of the inter-band frequency hopping may include at least one of the following:
a switching time in an intra-frequency range (intra-frequency range), which indicates a switching time when two first BWPs are in a same frequency domain range (frequency range); and
a switching time in an inter-frequency range (inter-frequency range), which indicates a switching time when two first BWPs are in different frequency ranges.

Optionally, a unit of the switching time may include, but is not limited to, one of Ts, Tc, symbol, slot, CP, ms, us, and s.

Optionally, before obtaining frequency hopping information and/or configuration information of first BWPs, the terminal may request a network side device (gNB) to obtain the frequency hopping information and/or the configuration information of the first BWPs.

Optionally, before obtaining first activation information, the terminal requests the network side device to obtain activation information of the frequency hopping.

Optionally, the network side device may obtain the first information through information interaction with a location server, such as an LMF, specifically including:
The network side device receives at least one of the following indication information from the location server:
frequency hopping indication, which is used to indicate that a UE needs to send an SRS with frequency hopping for positioning measurement. The frequency hopping indication is used to indicate at least one of the following:
a frequency hopping indication identifier;
the number of hops for the frequency hopping;
a frequency domain configuration and/or a time domain configuration corresponding to each hop; and
a time frequency resource configuration of a downlink positioning reference signal (DownLink-Positioning Reference Signal, DL PRS).

The embodiment of this application further gives the following several examples of SRS transmission manners.

The terminal needs to transmit four SRS resources: R1, R2, R3, and R4, where two resources are transmitted in one slot, and the SRS resources are repeated for 4 times.

Scheme 1: Resource sweeping (resource sweeping) is performed first, and then resource repetition is performed.

If the terminal does not send an SRS with frequency hopping, the sending process is shown in FIG. 3.

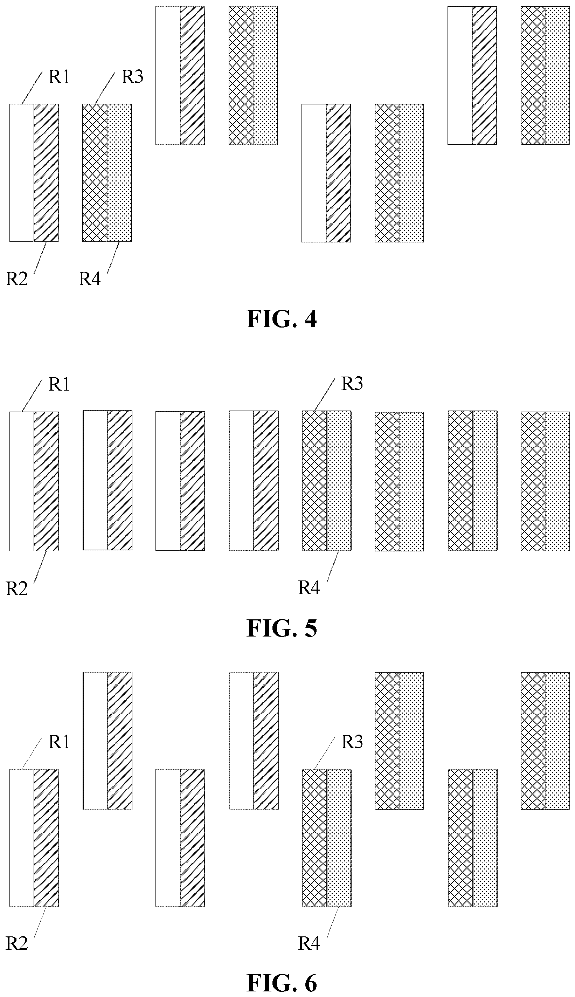

If the terminal sends an SRS by inter-slot frequency hopping and the number of hops is 2, the sending process is shown in FIG. 4.

Scheme 2: Inter-slot repetition (inter-slot repetition) is performed first, and then resource switching is performed.

If the terminal does not send an SRS with frequency hopping, the sending process is shown in FIG. 5.

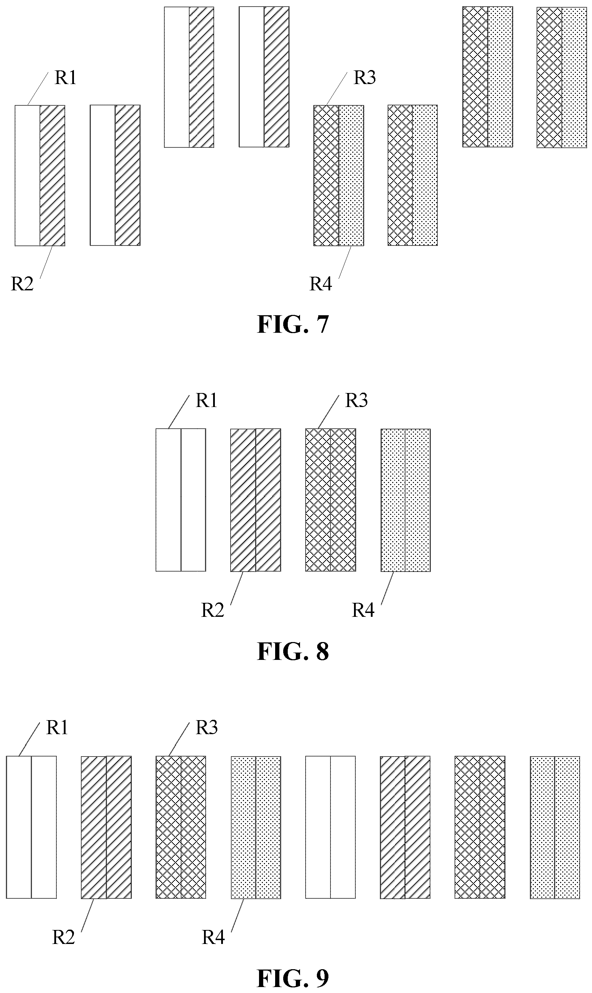

If the terminal sends an SRS by inter-slot frequency hopping and the number of hops is 2, the sending process is shown in FIG. 6 or FIG. 7.

Scheme 3: Intra-slot repetition (intra-slot repetition) is performed first, and then resource switching is performed.

If the terminal does not send an SRS with frequency hopping and performs inter-slot repetition, the sending process is shown in FIG. 8.

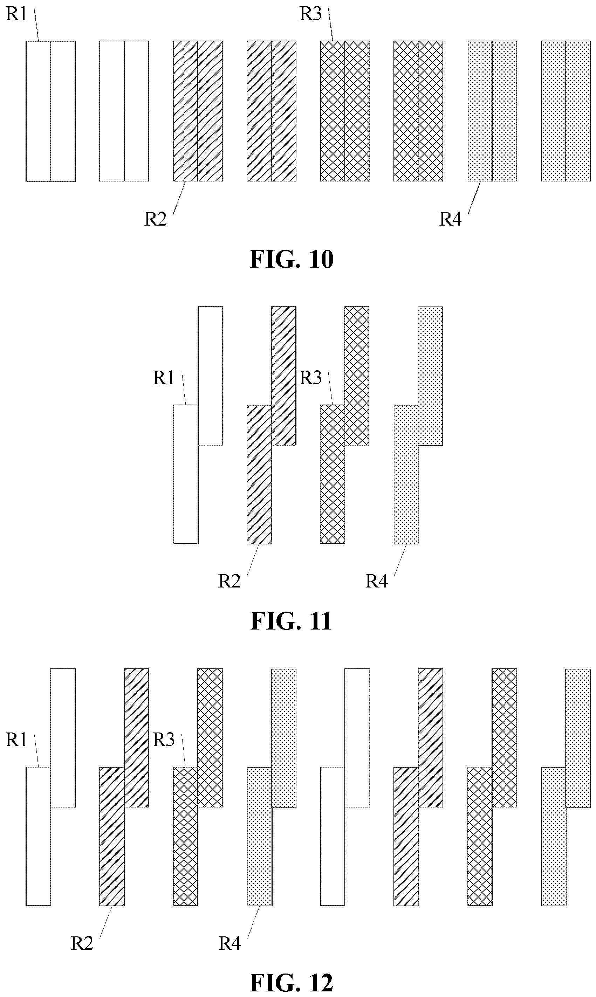

If the terminal does not send an SRS with frequency hopping and performs inter-slot repetition, the sending process is shown in FIG. 9 or FIG. 10.

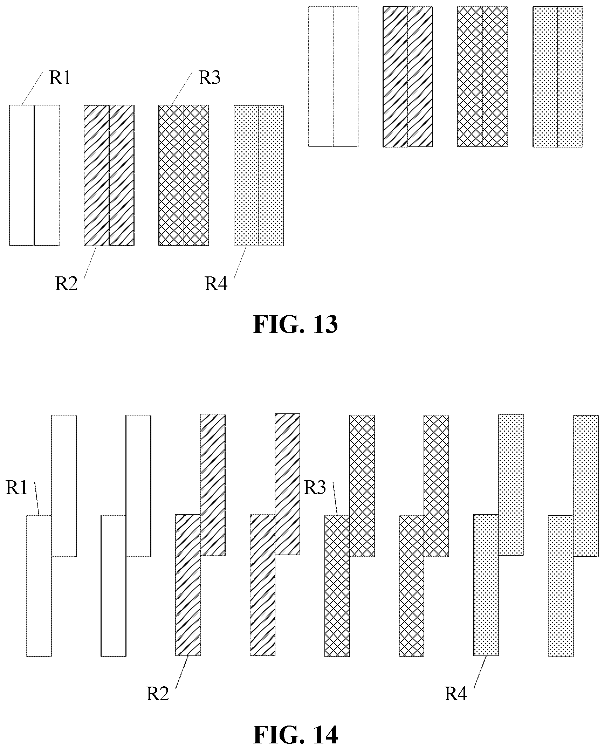

If the terminal sends an SRS by intra-slot frequency hopping and the number of hops is 2, the switching time occupies (punctures) several symbols. In a case that the symbol occupation by the switching time is not considered, if no inter-slot repetition is performed, the sending process is shown in FIG. 11. If inter-slot repetition is performed, the sending process is shown in FIG. 12, FIG. 13, FIG. 14, or FIG. 15.

Scheme 4: On the basis of the scheme 1, a symbol S0 occupied by a switching time is considered.

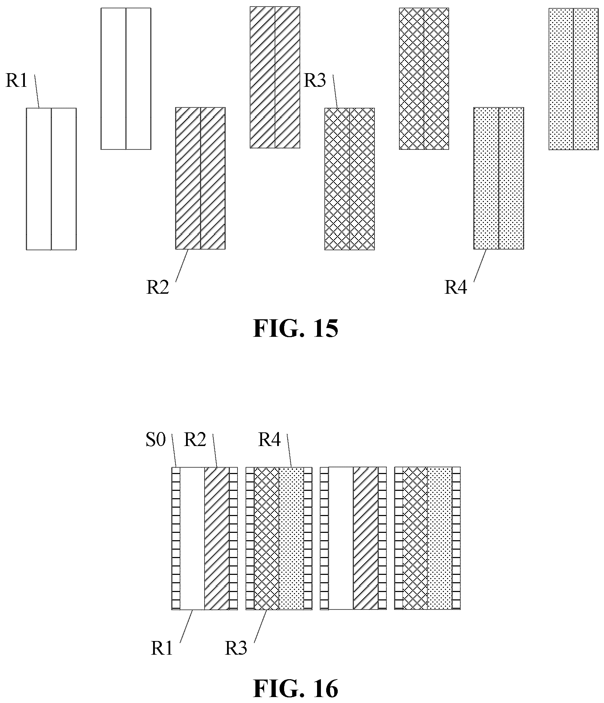

If the terminal does not send an SRS with frequency hopping, the sending process is shown in FIG. 16.

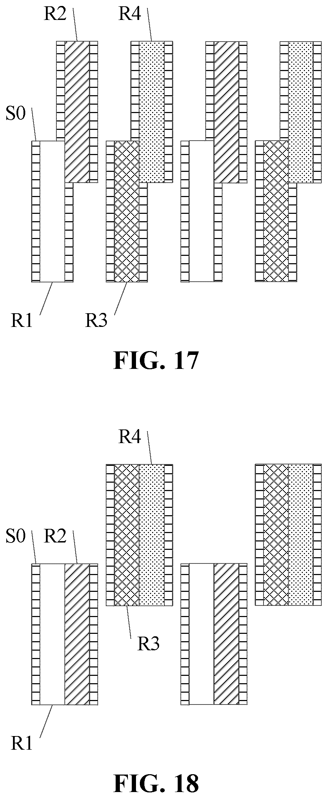

If the terminal sends an SRS by intra-slot frequency hopping and the number of hops is 2, the sending process is shown in FIG. 17.

If the terminal sends an SRS by inter-slot frequency hopping and the number of hops is 2, the sending process is shown in FIG. 18.

When the terminal performs intra-slot frequency hopping, switching of Symbol level is highly likely to cause some symbols occupied by the SRS to be disconnected from the middle. Therefore, if the capability of the UE only supports a slot level buffer (slot level buffer), then during slot level switching, these slots should be avoided. The number of symbols for each hop is required be greater than 1.

As can be seen from the technical solution of the above-mentioned embodiment, in the embodiment of this application, the frequency hopping is flexibly configured by obtaining the frequency hopping information, the first indication information, and the first activation information, to cause the terminal to send an SRS by the frequency hopping, so that an effective bandwidth for the SRS can be increased and accuracy of positioning measurement can be improved.

In the reference signal sending method according to the embodiment of this application, an execution subject may be a reference signal sending apparatus. The reference signal sending apparatus according to the embodiment of this application is described with an example in which the reference signal sending apparatus performs the reference signal sending method in the embodiment of this application.

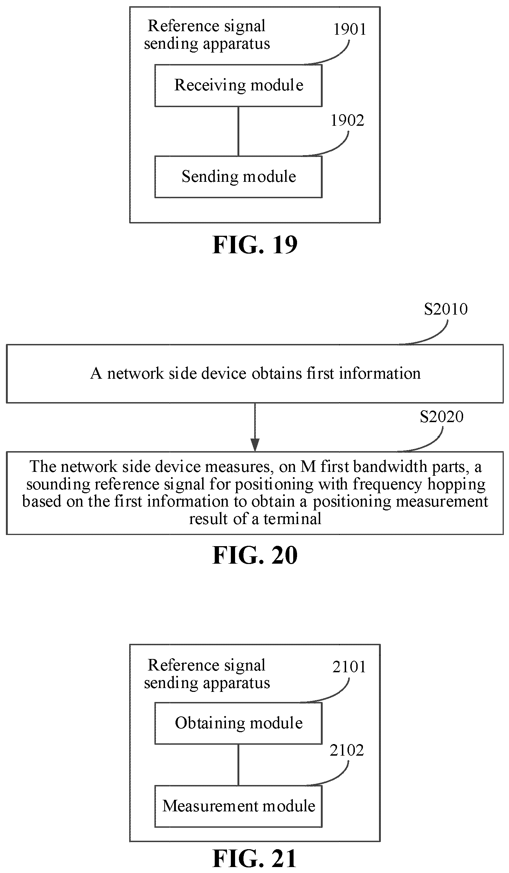

As shown in FIG. 19, the reference signal sending apparatus includes: a receiving module 1901 and a sending module 1902.

The receiving module 1901 is configured to obtain first information; and the sending module 1902 is configured to send, on M first bandwidth parts BWPs, a sounding reference signal for positioning with frequency hopping based on the first information, where the frequency hopping includes N hops, each hop corresponds to a different narrowband, and M and N are positive integers.

Optionally, the first information includes at least one of the following:
frequency hopping information for indicating the frequency hopping;
first indication information, where the first indication information is used to indicate configuration information of L first BWPs; and
first activation information, where the first activation information is used to indicate activation information of the M first BWPs,
where L is a positive integer greater than or equal to M.

As can be seen from the technical solution of the above-mentioned embodiment, in the embodiment of this application, the sounding reference signal for positioning is sent on the M first BWPs with frequency hopping based on the obtained first information, so that an effective bandwidth for the SRS can be increased and accuracy of positioning measurement can be improved.

Based on the above-mentioned embodiment, optionally, the first indication information includes at least one of the following:
second indication information, where the second indication information is used to indicate an enabling state of the L first BWPs;
BWP types of the L first BWPs;
monitoring information of the L first BWPs; and
set information of a first BWP set including the L first BWPs.

Optionally, the set information of the first BWP set includes at least one of the following:
a set identifier of the first BWP set;
the number of the first BWPs;
a BWP identifier of each first BWP; and
configuration information of the M first BWPs.

Optionally, in a case that one first BWP corresponds to multiple hops, the first indication information includes at least one of the following:
third indication information, where the third indication information is used to indicate an enabling state of the first BWP;
a BWP type of the first BWP;
monitoring information of the first BWP;
a BWP identifier of the first BWP;
frequency domain position information and/or bandwidth information of the first BWP; and
configuration information of the multiple hops corresponding to the first BWP.

Optionally, the configuration information of the multiple hops corresponding to the first BWP includes at least one of the following:
frequency domain position information and/or bandwidth information of each of the multiple hops corresponding to the first BWP;
common frequency domain position information of the multiple hops corresponding to the first BWP;
a frequency domain position offset between adjacent hops in frequency domain among the multiple hops corresponding to the first BWP;
an overlapping bandwidth between adjacent hops in frequency domain among the multiple hops corresponding to the first BWP; and
the number of the multiple hops corresponding to the first BWP.

Optionally, the frequency domain position information of each of the hops corresponding to the first BWP includes at least one of the following:
a frequency domain position of each of the multiple hops corresponding to the first BWP; and
a relative frequency domain position of each of the multiple hops corresponding to the first BWP, which corresponds to a common frequency domain position referred to by the corresponding common frequency domain position information.

Optionally, the frequency domain position information and/or bandwidth information of each of the multiple hops corresponding to the first BWP satisfies at least one of the following:
frequency domain positions of each of the multiple hops corresponding to the first BWP are the same or different;
bandwidth of each hop among the multiple hops corresponding to the first BWP is the same;
a minimum frequency domain offset between adjacent hops in frequency domain among the multiple hops corresponding to the first BWP is the same;
a frequency domain offset between adjacent hops in frequency domain among the multiple hops corresponding to the first BWP is the same;
a bandwidth corresponding to the first BWP is less than or equal to a first bandwidth threshold, or less than or equal to a second bandwidth threshold, where the first bandwidth threshold is greater than the second bandwidth threshold;
the bandwidth of each of the multiple hops correspond to the first BWP is less than or equal to the second bandwidth threshold; and
a total bandwidth of the multiple hops corresponding to the first BWP is less than or equal to the first bandwidth threshold.

Optionally, the multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

Optionally, in a case that each BWP state corresponds to multiple hops, state information of the BWP state includes at least one of a frequency domain offset or bandwidth information of the BWP state,
where the frequency domain offset is use to indicate a frequency domain offset of the first BWP between the multiple hops corresponding to the BWP state; and
the bandwidth information is used to indicate bandwidth information of the first BWP corresponding to the multiple hops in the BWP state.

Optionally, the configuration information of the M first BWPs includes at least one of the following:
frequency domain position information of the M first BWPs;
bandwidth information of the M first BWPs;
an overlapping bandwidth between the M first BWPs;
BWP identification of each first BWP;
frequency domain position information of each first BWP; and
bandwidth information of each first BWP.

Optionally, the reference signal sending apparatus performs or does not perform one or more of the following operations on the M first BWPs:
skipping performing synchronization signal and PBCH block measurement;
monitoring downlink paging;
skipping monitoring downlink paging;
skipping sending a preamble;
skipping sending information A;
skipping transmitting on a physical uplink control channel;
skipping transmitting on a physical uplink shared channel; and
transmitting a sounding reference signal.

Optionally, the frequency hopping information includes at least one of the following:
a number N of the hops for the frequency hopping;
a hop identifier, where the hop identifier is used to indicate the hops for the frequency hopping;
a BWP identifier, where the BWP identifier is used to indicate the first BWP;
a state identifier, where the state identifier is used to indicate the BWP state, and the BWP state is a state of the first BWP;
first frequency domain position information, where the first frequency domain position information is used to indicate a frequency domain position of each hop;
first time domain location information, where the first time domain location information is used to indicate a time domain location of each hop;
a first period, where the first period is a period of the hops for the frequency hopping; and
first repetition configuration information, where the first repetition configuration information is used to indicate a repetition configuration of the hops for the frequency hopping.

Optionally, the number N of the hops is the number of narrowbands;
and/or
there is no overlap in time domain location between different hops;
   and/or
that there is no overlap in time domain location between different hops includes that a time domain gap between different hops is greater than a first time threshold, and the first time threshold is N1 symbols or N2 slots;
   and/or
there is partial overlap in the frequency domain positions between the different hops.

Optionally, the first frequency domain position information includes at least one of the following:
a bandwidth of each hop;
an initial frequency domain position of each hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by at least one of the following:
a bandwidth and/or an initial frequency domain position of a first BWP corresponding to the hop;
joint coding information of the bandwidth and/or the initial frequency domain position of the hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by the bandwidth and/or the initial frequency domain position of the first BWP corresponding to the hop, including at least one of the following:
the bandwidth and/or the initial frequency domain position of the hop is the bandwidth and/or the initial frequency domain position of the first BWP corresponding to the hop; and
the initial frequency domain position of the hop is determined relative to the initial frequency domain position of the first BWP corresponding to the hop.

Optionally, the bandwidth and/or the initial frequency domain position of each hop satisfies at least one of the following:
a frequency domain offset between initial frequency domain positions of adjacent hops in frequency domain is the same;
an initial frequency domain position of the hop with a lowest frequency domain position is the same as an initial frequency domain position of the sounding reference signal; and
bandwidths of different hops are the same.

Optionally, the first time domain location information includes at least one of the following:
a time domain location of each hop; and
a time domain location of a first hop,
where the time domain location includes at least one of the following:
a starting time domain location;
an ending time domain location; and
duration.

Optionally, the first time domain location information is determined by at least one of the following:
time domain location information of the sounding reference signal; and
activation information and/or configuration information of the first BWP.

Optionally, that the first time domain location information is determined by time domain location information of the sounding reference signal includes:
the first time domain location information is determined based on a slot offset or a starting time domain location of an aperiodic sounding reference signal,
   or
the first time domain location information is determined based on configuration information of a periodic or semi-static SRS.

Optionally, the first time domain location information satisfies at least one of the following:
a time domain length of the hop is greater than a transmission time of an SRS corresponding to the hop;
a starting time domain location of the hop is before a time at which the SRS corresponding to the hop is sent; and
the starting time domain location of the hop is before a first time gap corresponding to the hop.

Optionally, the activation information and/or the configuration information of the first BWP includes at least one of the following:
a time domain location P1 of the first activation information;
a time domain location P2 of the first indication information;
a time domain gap that is between adjacent hops in time domain and that is indicated by the first indication information;
a first offset K1, where the first offset is an offset corresponding to the first activation information and/or the first indication information, and
a second offset K2, where the second offset is an offset of first BWPs adjacent in time domain.

Optionally, the first time domain location information is used to determine activation information or an activation length of the first BWP.

Optionally, the first period is determined by one of the following manners:
a second period, where the second period is a period of the SRS; and
a third period, where the third period is a period of the first BWP.

Optionally, the first repetition configuration information includes at least one of the following:
a first repetition count, where the first repetition count is used to indicate a repetition count of each hop in a second period, and the second period is a period of the SRS; and
a time domain gap between adjacent repeated hops.

Optionally, the first indication information or the first activation information includes time domain candidate window information, and the time domain candidate window information is used to indicate a candidate time domain location corresponding to each hop or each first BWP,
where the time domain candidate window information includes at least one of the following:
duration;
a periodicity;
a starting time domain location;
a repetition configuration;
a BWP identifier of the first BWP;
a state identifier of a BWP state, where the BWP state is a state of the first BWP;
a first mapping mode, where the first mapping mode is used to indicate a mapping relationship between the hops for the frequency hopping and the first BWPs;
a second mapping model, where the first mapping mode is used to indicate a time domain mapping position of each hop under a time domain candidate window; and
a frequency hopping sequence of the first BWPs, which, in an implementation, is a frequency hopping sequence of the M first BWPs.

Optionally, the first activation information further includes at least one of the following:
an indication of a first BWP corresponding to initial frequency hopping;
a first mapping mode, where the first mapping mode is used to indicate a mapping relationship between the hops for the frequency hopping and the first BWPs;
the number of activated first BWPs;
a frequency hopping sequence of the first BWPs, which, in an implementation, is a frequency hopping sequence of the M first BWPs; and
a list of the activated first BWPs.

Optionally, the frequency hopping sequence of the first BWPs is determined by one of the following manners:
indicating adjacent first BWPs;
an indicated switching sequence; and
a switching sequence agreed in a protocol,
where the indicated switching sequence is a relative sequence or an absolute sequence.

Optionally, the first activation information is further used to indicate switching from a currently activated BWP to the first BWP.

Optionally, the switching from a currently activated BWP to the first BWP includes: switching from the currently activated BWP to a first BWP nearest in frequency domain position, or a first BWP indicated by the first activation information, or a first BWP determined by a protocol and agreement.

Optionally, the first mapping mode includes at least one of the following:
a mapping rule between hops and first BWPs;
a mapping rule between the number of the hops and the first BWPs;
a mapping rule between a bandwidth and the first BWPs;
a mapping mode based on an association period, where the association period is obtained from an association relationship between a second period and a third period, or from an association relationship between the second period and a first period, where the first period is a period of the hops for the frequency hopping, the second period is a period of the SRS, and the third period is a period of the first BWPs; and
a mapping mode based on resources and/or repetition information of the SRS.

Optionally, a plurality of second periods are associated with one third period, or the plurality of second periods are associated with one first period.

Optionally, in a case that the first BWPs in the third period are discarded, or that the hops in the first period are discarded, the association period supports use of an extension manner, or the association period is discarded.

Optionally, in the mapping mode based on resources and/or repetition information of the SRS, one second period is associated with a plurality of third periods or a plurality of first periods; and/or each SRS resource corresponds to a plurality of first BWPs.

Optionally, the mapping mode based on resources and/or repetition information of the SRS includes: a mapping mode based on the number of symbols and/or the number of repetitions of the SRS resources.

Optionally, in a case that the number of repetitions is 1, the frequency hopping is intra-slot frequency hopping.

Optionally, in a case that the number of repetitions is greater than 1, the number of intra-slot frequency hopping groups is one of:
a ratio of the number of symbols to the number of repetitions of the SRS resources;
a ratio of the number of symbols of the SRS resources to the number of symbols corresponding to each hop;
the number of repetitions; and
a product of the number of intra-slot frequency hopping groups and the number of repetitions.

Optionally, a time domain gap between adjacent hops in time domain is greater than or equal to a first gap threshold,
or
a time domain gap between first BWPs adjacent in time domain is greater than or equal to the first gap threshold,
where the first gap threshold is determined by one of the following manners: a protocol agreement, a network side configuration, and a terminal capability.

Optionally, in a case that the unit of the first gap threshold is symbol or slot, an SCS associated with the first gap threshold is consistent with an SCS of at least one of the current following of the reference signal sending apparatus:
a first BWP;
an activated BWP; and
an SRS.

Optionally, the reference signal sending apparatus does not perform target communication behavior during frequency hopping switching by the reference signal sending apparatus or under the first BWPs, where the target communication behavior includes at least one of the following:
receiving a downlink signal and/or from a downlink channel; and
transmitting an uplink signal and/or on an uplink channel.

Optionally, during a period in which the reference signal sending apparatus sends the sounding reference signal, during frequency hopping switching by the reference signal sending apparatus, or under the first BWPs, the reference signal sending apparatus sends no SRS or does not switch to the BWPs in a case that the reference signal sending apparatus overlaps or collides with a downlink signal and/or a downlink channel, and/or overlaps or collides with an uplink signal and/or an uplink channel.

Optionally, during a period in which the reference signal sending apparatus sends the SRS, during frequency hopping switching by the reference signal sending apparatus, or under the first BWPs, the reference signal sending apparatus sends no sounding reference signal, or does not switch to the first BWPs, or abandons a second period of the SRS to enter an association period, in a case that the reference signal sending apparatus overlaps or collides with an SSB.

Optionally, for a same SRS resource, in a case that the reference signal sending apparatus cannot send the SRS on at least one hop, the sending module 1902 discards SRS transmission on all hops,
or
for the same SRS resource, in a case that different hops are associated with different Tx timing error groups, the sending module 1902 reports the Tx timing error groups,
where the Tx timing error groups are associated with at least one of the following:
   a hop identifier;
   a BWP identifier of the first BWP;
   a state identifier of a state corresponding to the first BWP;
   a frequency domain position; and
   SRS identification information.

Optionally, the sending module 1902 is further configured to report a frequency hopping related capability of the reference signal sending apparatus, and the frequency hopping related capability includes at least one of the following:
whether the reference signal sending apparatus supports sending of the SRS with frequency hopping;
a minimum time gap in switching time between two hops that are different or adjacent in time domain;
a maximum bandwidth of one hop;
a maximum bandwidth of the reference signal sending apparatus for frequency hopping;
a maximum time gap between multiple hops;
a maximum timing difference between the multiple hops, where the timing difference is used to indicate a synchronization relationship between the multiple hops;
a maximum phase difference between the multiple hops; and
a maximum frequency difference between the multiple hops.

Optionally, the frequency hopping related capability of the reference signal sending apparatus includes at least one of the following:
a switching time of intra-band frequency hopping; and
a switching time of inter-band frequency hopping.

Optionally, the sending module 1902 is further configured to report a related capability of the first BWP, and the related capability of the first BWP includes at least one of the following:
whether the reference signal sending apparatus supports sending of the SRS on the first BWP;
a minimum time gap in switching time between first BWPs that are different or adjacent in time domain;
a maximum bandwidth of the first BWPs;
a maximum bandwidth of all first BWPs;
a maximum bandwidth sum of the first BWPs;
a maximum time gap between a plurality of first BWPs;
a maximum timing difference between the plurality of first BWPs, where the timing difference is used to indicate a synchronization relationship between the multiple hops;
a maximum phase difference between the plurality of first BWPs; and
a maximum frequency difference between the plurality of first BWPs.

As can be seen from the technical solution of the above-mentioned embodiment, in the embodiment of this application, the frequency hopping is flexibly configured by obtaining the frequency hopping information, the first indication information, and the first activation information, to cause the reference signal sending apparatus to send an SRS by the frequency hopping, so that an effective bandwidth for the SRS can be increased and accuracy of positioning measurement can be improved.

The reference signal sending apparatus in the embodiment of this application may be an electronic device, such as an electronic device with an operating system, or a component such as an integrated circuit or a chip in the electronic device. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in the embodiment of this application.

The reference signal sending apparatus according to the embodiment of this application can implement each process implemented in the method embodiment of FIG. 2 to FIG. 18, and achieve the same technical effect. To avoid repetition, details are not described herein.

As shown in FIG. 20, an embodiment of this application provides a reference signal sending method, and an execution body of the method is a network side device. In other words, the method may be performed by software or hardware installed on the network side device. The method includes the following steps.

S2010: The network side device obtains first information.

S2020: The network side device measures, on M first BWPs, a sounding reference signal for positioning with frequency hopping based on the first information to obtain a positioning measurement result of a terminal, where the frequency hopping includes N hops, each hop corresponds to a different narrowband, and M and N are positive integers.

Optionally, the first information includes at least one of the following:
frequency hopping information for indicating the frequency hopping;
first indication information, where the first indication information is used to indicate configuration information of L first BWPs; and
first activation information, where the first activation information is used to indicate activation information of the M first BWPs,
where L is a positive integer greater than or equal to M.

Steps S2010 and S2020 can implement the method embodiment shown in FIG. 1 and achieve the same technical effect, and the repeated parts are not repeated herein.

As can be seen from the technical solution of the above-mentioned embodiment, in the embodiment of this application, the sounding reference signal for positioning is measured on the M first BWPs with the frequency hopping based on the obtained first information to obtain the positioning measurement result of the terminal, so that an effective bandwidth for the reference signal for positioning can be increased and accuracy of positioning measurement can be improved.

Optionally, the first indication information includes at least one of the following:
second indication information, where the second indication information is used to indicate an enabling state of the L first BWPs;
BWP types of the L first BWPs;
monitoring information of the L first BWPs; and
set information of a first BWP set including the L first BWPs.

Optionally, the set information of the first BWP set includes at least one of the following:
a set identifier of the first BWP set;
the number of the first BWPs;
a BWP identifier of each first BWP; and
configuration information of the M first BWPs.

Optionally, in a case that one first BWP corresponds to multiple hops, the first indication information includes at least one of the following:
third indication information, where the third indication information is used to indicate an enabling state of the first BWP;
a BWP type of the first BWP;
monitoring information of the first BWP;
a BWP identifier of the first BWP;
frequency domain position information and/or bandwidth information of the first BWP; and
configuration information of the multiple hops corresponding to the first BWP.

Optionally, the configuration information of the multiple hops corresponding to the first BWP includes at least one of the following:
frequency domain position information and/or bandwidth information of each of the multiple hops corresponding to the first BWP;
common frequency domain position information of the multiple hops corresponding to the first BWP;
a frequency domain position offset between adjacent hops in frequency domain among the multiple hops corresponding to the first BWP;
an overlapping bandwidth between adjacent hops in frequency domain among the multiple hops corresponding to the first BWP; and
the number of the multiple hops corresponding to the first BWP.

Optionally, the frequency domain position information of each of the hops corresponding to the first BWP includes at least one of the following:
a frequency domain position of each of the multiple hops corresponding to the first BWP; and
a relative frequency domain position of each of the multiple hops corresponding to the first BWP, which corresponds to a common frequency domain position referred to by the corresponding common frequency domain position information.

Optionally, the frequency domain position information and/or bandwidth information of each of the multiple hops corresponding to the first BWP satisfies at least one of the following:
frequency domain positions of each of the multiple hops corresponding to the first BWP are the same or different;
bandwidth of each hop among the multiple hops corresponding to the first BWP is the same;
a minimum frequency domain offset between adjacent hops in frequency domain among the multiple hops corresponding to the first BWP is the same;
a frequency domain offset between adjacent hops in frequency domain among the multiple hops corresponding to the first BWP is the same;
a bandwidth corresponding to the first BWP is less than or equal to a first bandwidth threshold, or less than or equal to a second bandwidth threshold, where the first bandwidth threshold is greater than the second bandwidth threshold;
the bandwidth of each of the multiple hops correspond to the first BWP is less than or equal to the second bandwidth threshold; and
a total bandwidth of the multiple hops corresponding to the first BWP is less than or equal to the first bandwidth threshold.

Optionally, the multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

Optionally, in a case that each BWP state corresponds to multiple hops, state information of the BWP state includes at least one of a frequency domain offset or bandwidth information of the BWP state,
where the frequency domain offset is use to indicate a frequency domain offset of the first BWP between the multiple hops corresponding to the BWP state; and
the bandwidth information is used to indicate bandwidth information of the first BWP corresponding to the multiple hops in the BWP state.

Optionally, the configuration information of the M first BWPs includes at least one of the following:
frequency domain position information of the M first BWPs;
bandwidth information of the M first BWPs;
an overlapping bandwidth between the M first BWPs;
BWP identification of each first BWP;
frequency domain position information of each first BWP; and
bandwidth information of each first BWP.

Optionally, the frequency hopping information includes at least one of the following:
a number N of the hops for the frequency hopping;
a hop identifier, where the hop identifier is used to indicate the hops for the frequency hopping;
a BWP identifier, where the BWP identifier is used to indicate the first BWP;
a state identifier, where the state identifier is used to indicate the BWP state, and the BWP state is a state of the first BWP;
first frequency domain position information, where the first frequency domain position information is used to indicate a frequency domain position of each hop;
first time domain location information, where the first time domain location information is used to indicate a time domain location of each hop;
a first period, where the first period is a period of the hops for the frequency hopping; and
first repetition configuration information, where the first repetition configuration information is used to indicate a repetition configuration of the hops for the frequency hopping.

Optionally, the frequency domain position of the hop includes a bandwidth and/or an initial frequency domain position of the hop, and the bandwidth and/or the initial frequency domain position of the hop is determined by at least one of the following:
a bandwidth and/or an initial frequency domain position of a first BWP corresponding to the hop;
joint coding information of the bandwidth and/or the initial frequency domain position of the hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by the bandwidth and/or the initial frequency domain position of the first BWP corresponding to the hop, including at least one of the following:
the bandwidth and/or the initial frequency domain position of the hop is the bandwidth and/or the initial frequency domain position of the first BWP corresponding to the hop; and
the initial frequency domain position of the hop is determined relative to the initial frequency domain position of the first BWP corresponding to the hop.

Optionally, the first time domain location information is determined by at least one of the following:
time domain location information of the sounding reference signal; and
activation information and/or configuration information of the first BWP.

Optionally, that the first time domain location information is determined by time domain location information of the sounding reference signal includes:
the first time domain location information is determined based on a slot offset or a starting time domain location of an aperiodic sounding reference signal,
   or
the first time domain location information is determined based on configuration information of a periodic or semi-static SRS, where the configuration information of the periodic or semi-static SRS includes at least one of the following:
a second period and offset indication information, where the second period is a period of the SRS;
a starting time domain location of the SRS; and
a length of the SRS.

Optionally, the activation information and/or the configuration information of the first BWP includes at least one of the following:
a time domain location P1 of the first activation information;
a time domain location P2 of the first indication information;
a time domain gap that is between adjacent hops in time domain and that is indicated by the first indication information;
a first offset K1, where the first offset is an offset corresponding to the first activation information and/or the first indication information, and
a second offset K2, where the second offset is an offset of first BWPs adjacent in time domain.

Optionally, the first time domain location information is used to determine activation information or an activation length of the first BWP.

Optionally, the first indication information or the first activation information includes time domain candidate window information, and the time domain candidate window information is used to indicate a candidate time domain location corresponding to each hop or each first BWP,
where the time domain candidate window information includes at least one of the following:
duration;
a periodicity;
a starting time domain location;
a repetition configuration;
a BWP identifier of the first BWP;
a state identifier of a BWP state, where the BWP state is a state of the first BWP;
a first mapping mode, where the first mapping mode is used to indicate a mapping relationship between the hops for the frequency hopping and the first BWPs;
a second mapping model, where the first mapping mode is used to indicate a time domain mapping position of each hop under a time domain candidate window; and
a frequency hopping sequence of the first BWPs.

Optionally, the first activation information further includes at least one of the following:
an indication of a first BWP corresponding to initial frequency hopping;
a first mapping mode, where the first mapping mode is used to indicate a mapping relationship between the hops for the frequency hopping and the first BWPs;
the number of activated first BWPs;
a frequency hopping sequence of the first BWPs; and
a list of the activated first BWPs.

Optionally, the first mapping mode includes at least one of the following:
a mapping rule between hops and first BWPs;
a mapping rule between the number of the hops and the first BWPs;
a mapping rule between a bandwidth and the first BWPs;
a mapping mode based on an association period, where the association period is obtained from an association relationship between a second period and a third period, or from an association relationship between the second period and a first period, where the first period is a period of the hops for the frequency hopping, the second period is a period of the SRS, and the third period is a period of the first BWPs; and
a mapping mode based on resources and/or repetition information of the SRS.

Optionally, a plurality of second periods are associated with one third period, or the plurality of second periods are associated with one first period.

Optionally, in a case that the first BWPs in the third period are discarded, or that the hops in the first period are discarded, the association period supports use of an extension manner, or the association period is discarded.

Optionally, in the mapping mode based on resources and/or repetition information of the SRS, one second period is associated with a plurality of third periods or a plurality of first periods; and/or each SRS resource corresponds to a plurality of first BWPs.

Optionally, the mapping mode based on resources and/or repetition information of the SRS includes: a mapping mode based on the number of symbols and/or the number of repetitions of the SRS resources.

Optionally, in a case that the number of repetitions is 1, the frequency hopping is intra-slot frequency hopping.

Optionally, in a case that the number of repetitions is greater than 1, the number of intra-slot frequency hopping groups is one of:
a ratio of the number of symbols to the number of repetitions of the SRS resources;
a ratio of the number of symbols of the SRS resources to the number of symbols corresponding to each hop;
the number of repetitions; and
a product of the number of intra-slot frequency hopping groups and the number of repetitions.

Optionally, before step S210, the method further includes:
The network side device receives a related capability of the first BWPs from the terminal, where the related capability of the first BWPs includes at least one of the following:
whether the terminal supports sending of the SRS on the first BWP;
a minimum time gap in switching time between first BWPs that are different or adjacent in time domain;
a maximum bandwidth of the first BWPs;
a maximum bandwidth of all first BWPs;
a maximum bandwidth sum of the first BWPs;
a maximum time gap between a plurality of first BWPs;
a maximum timing difference between the plurality of first BWPs, where the timing difference is used to indicate a synchronization relationship between the multiple hops;
a maximum phase difference between the plurality of first BWPs; and
a maximum frequency difference between the plurality of first BWPs.

In the embodiment of this application, the method embodiment of the terminal side in the above-mentioned embodiment can be implemented to achieve the same technical effect, and the repeated parts are not repeated herein.

As can be seen from the technical solution of the above-mentioned embodiment, in the embodiment of this application, the frequency hopping is flexibly configured by obtaining the frequency hopping information, the first indication information, and the first activation information, to cause the network side device to measure an SRS by the frequency hopping, so that an effective bandwidth for the SRS can be increased and accuracy of positioning measurement can be improved.

In the reference signal sending method according to the embodiment of this application, an execution subject may be a reference signal sending apparatus. The reference signal sending apparatus according to the embodiment of this application is described with an example in which the reference signal sending apparatus performs the reference signal sending method in the embodiment of this application.

As shown in FIG. 21, the reference signal sending apparatus includes: an obtaining module 2101 and a measurement module 2102.

The obtaining module 2101 is configured to obtain first information; and the measurement module 2102 is configured to measure, on M first BWPs, a sounding reference signal for positioning with frequency hopping based on the first information to obtain a positioning measurement result of a terminal, where the frequency hopping includes N hops, each hop corresponds to a different narrowband, and M and N are positive integers.

Optionally, the first information includes at least one of the following:
frequency hopping information for indicating the frequency hopping;
first indication information, where the first indication information is used to indicate configuration information of L first BWPs; and
first activation information, where the first activation information is used to indicate activation information of the M first BWPs,
where L is a positive integer greater than or equal to M.

As can be seen from the technical solution of the above-mentioned embodiment, in the embodiment of this application, the sounding reference signal for positioning is measured on the M first BWPs with the frequency hopping based on the obtained first information to obtain the positioning measurement result of the terminal, so that an effective bandwidth for the reference signal for positioning can be increased and accuracy of positioning measurement can be improved.

Optionally, the first indication information includes at least one of the following:
second indication information, where the second indication information is used to indicate an enabling state of the L first BWPs;
BWP types of the L first BWPs;
monitoring information of the L first BWPs; and
set information of a first BWP set including the L first BWPs.

Optionally, the set information of the first BWP set includes at least one of the following:
a set identifier of the first BWP set;
the number of the first BWPs;
a BWP identifier of each first BWP; and
configuration information of the M first BWPs.

Optionally, in a case that one first BWP corresponds to multiple hops, the first indication information includes at least one of the following:
third indication information, where the third indication information is used to indicate an enabling state of the first BWP;
a BWP type of the first BWP;
monitoring information of the first BWP;
a BWP identifier of the first BWP;
frequency domain position information and/or bandwidth information of the first BWP; and
configuration information of the multiple hops corresponding to the first BWP.

Optionally, the configuration information of the multiple hops corresponding to the first BWP includes at least one of the following:
frequency domain position information and/or bandwidth information of each of the multiple hops corresponding to the first BWP;
common frequency domain position information of the multiple hops corresponding to the first BWP;
a frequency domain position offset between adjacent hops in frequency domain among the multiple hops corresponding to the first BWP;
an overlapping bandwidth between adjacent hops in frequency domain among the multiple hops corresponding to the first BWP; and
the number of the multiple hops corresponding to the first BWP.

Optionally, the frequency domain position information of each of the hops corresponding to the first BWP includes at least one of the following:
a frequency domain position of each of the multiple hops corresponding to the first BWP; and
a relative frequency domain position of each of the multiple hops corresponding to the first BWP, which corresponds to a common frequency domain position referred to by the corresponding common frequency domain position information.

Optionally, the frequency domain position information and/or bandwidth information of each of the multiple hops corresponding to the first BWP satisfies at least one of the following:
frequency domain positions of each of the multiple hops corresponding to the first BWP are the same or different;
bandwidth of each hop among the multiple hops corresponding to the first BWP is the same;
a minimum frequency domain offset between adjacent hops in frequency domain among the multiple hops corresponding to the first BWP is the same;
a frequency domain offset between adjacent hops in frequency domain among the multiple hops corresponding to the first BWP is the same;
a bandwidth corresponding to the first BWP is less than or equal to a first bandwidth threshold, or less than or equal to a second bandwidth threshold, where the first bandwidth threshold is greater than the second bandwidth threshold;
the bandwidth of each of the multiple hops correspond to the first BWP is less than or equal to the second bandwidth threshold; and
a total bandwidth of the multiple hops corresponding to the first BWP is less than or equal to the first bandwidth threshold.

Optionally, the multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

Optionally, in a case that each BWP state corresponds to multiple hops, state information of the BWP state includes at least one of a frequency domain offset or bandwidth information of the BWP state,
where the frequency domain offset is use to indicate a frequency domain offset of the first BWP between the multiple hops corresponding to the BWP state; and
the bandwidth information is used to indicate bandwidth information of the first BWP corresponding to the multiple hops in the BWP state.

Optionally, the configuration information of the M first BWPs includes at least one of the following:
frequency domain position information of the M first BWPs;
bandwidth information of the M first BWPs;
an overlapping bandwidth between the M first BWPs;
BWP identification of each first BWP;
frequency domain position information of each first BWP; and
bandwidth information of each first BWP.

Optionally, the frequency hopping information includes at least one of the following:
a number N of the hops for the frequency hopping;
a hop identifier, where the hop identifier is used to indicate the hops for the frequency hopping;
a BWP identifier, where the BWP identifier is used to indicate the first BWP;
a state identifier, where the state identifier is used to indicate the BWP state, and the BWP state is a state of the first BWP;
first frequency domain position information, where the first frequency domain position information is used to indicate a frequency domain position of each hop;
first time domain location information, where the first time domain location information is used to indicate a time domain location of each hop;
a first period, where the first period is a period of the hops for the frequency hopping; and
first repetition configuration information, where the first repetition configuration information is used to indicate a repetition configuration of the hops for the frequency hopping.

Optionally, the frequency domain position of the hop includes a bandwidth and/or an initial frequency domain position of the hop, and the bandwidth and/or the initial frequency domain position of the hop is determined by at least one of the following:
a bandwidth and/or an initial frequency domain position of a first BWP corresponding to the hop;
joint coding information of the bandwidth and/or the initial frequency domain position of the hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by the bandwidth and/or the initial frequency domain position of the first BWP corresponding to the hop, including at least one of the following:
the bandwidth and/or the initial frequency domain position of the hop is the bandwidth and/or the initial frequency domain position of the first BWP corresponding to the hop; and
the initial frequency domain position of the hop is determined relative to the initial frequency domain position of the first BWP corresponding to the hop.

Optionally, the first time domain location information is determined by at least one of the following:
time domain location information of the sounding reference signal; and
activation information and/or configuration information of the first BWP.

Optionally, that the first time domain location information is determined by time domain location information of the sounding reference signal includes:
the first time domain location information is determined based on a slot offset or a starting time domain location of an aperiodic sounding reference signal,
   or
the first time domain location information is determined based on configuration information of a periodic or semi-static SRS, where the configuration information of the periodic or semi-static SRS includes at least one of the following:
a second period and offset indication information, where the second period is a period of the SRS;
a starting time domain location of the SRS; and
a length of the SRS.

Optionally, the activation information and/or the configuration information of the first BWP includes at least one of the following:
a time domain location P1 of the first activation information;
a time domain location P2 of the first indication information;
a time domain gap that is between adjacent hops in time domain and that is indicated by the first indication information;
a first offset K1, where the first offset is an offset corresponding to the first activation information and/or the first indication information, and
a second offset K2, where the second offset is an offset of first BWPs adjacent in time domain.

Optionally, the first time domain location information is used to determine activation information or an activation length of the first BWP.

Optionally, the first indication information or the first activation information includes time domain candidate window information, and the time domain candidate window information is used to indicate a candidate time domain location corresponding to each hop or each first BWP,
where the time domain candidate window information includes at least one of the following:
duration;
a periodicity;
a starting time domain location;
a repetition configuration;
a BWP identifier of the first BWP;
a state identifier of a BWP state, where the BWP state is a state of the first BWP;
a first mapping mode, where the first mapping mode is used to indicate a mapping relationship between the hops for the frequency hopping and the first BWPs;
a second mapping model, where the first mapping mode is used to indicate a time domain mapping position of each hop under a time domain candidate window; and
a frequency hopping sequence of the first BWPs.

Optionally, the first activation information further includes at least one of the following:
an indication of a first BWP corresponding to initial frequency hopping;
a first mapping mode, where the first mapping mode is used to indicate a mapping relationship between the hops for the frequency hopping and the first BWPs;
the number of activated first BWPs;
a frequency hopping sequence of the first BWPs; and
a list of the activated first BWPs.

Optionally, the first mapping mode includes at least one of the following:
a mapping rule between hops and first BWPs;
a mapping rule between the number of the hops and the first BWPs;
a mapping rule between a bandwidth and the first BWPs;
a mapping mode based on an association period, where the association period is obtained from an association relationship between a second period and a third period, or from an association relationship between the second period and a first period, where the first period is a period of the hops for the frequency hopping, the second period is a period of the SRS, and the third period is a period of the first BWPs; and
a mapping mode based on resources and/or repetition information of the SRS.

Optionally, a plurality of second periods are associated with one third period, or the plurality of second periods are associated with one first period.

Optionally, in a case that the first BWPs in the third period are discarded, or that the hops in the first period are discarded, the association period supports use of an extension manner, or the association period is discarded.

Optionally, in the mapping mode based on resources and/or repetition information of the SRS, one second period is associated with a plurality of third periods or a plurality of first periods; and/or each SRS resource corresponds to a plurality of first BWPs.

Optionally, the mapping mode based on resources and/or repetition information of the SRS includes: a mapping mode based on the number of symbols and/or the number of repetitions of the SRS resources.

Optionally, in a case that the number of repetitions is 1, the frequency hopping is intra-slot frequency hopping.

Optionally, in a case that the number of repetitions is greater than 1, the number of intra-slot frequency hopping groups is one of:
a ratio of the number of symbols to the number of repetitions of the SRS resources;
a ratio of the number of symbols of the SRS resources to the number of symbols corresponding to each hop;
the number of repetitions; and
a product of the number of intra-slot frequency hopping groups and the number of repetitions.

Optionally, the obtaining module 2101 is further configured to receive a related capability of the first BWP from the terminal, and the related capability of the first BWP includes at least one of the following:
whether the terminal supports sending of the SRS on the first BWP;
a minimum time gap in switching time between first BWPs that are different or adjacent in time domain;
a maximum bandwidth of the first BWPs;
a maximum bandwidth of all first BWPs;
a maximum bandwidth sum of the first BWPs;
a maximum time gap between a plurality of first BWPs;
a maximum timing difference between the plurality of first BWPs, where the timing difference is used to indicate a synchronization relationship between the multiple hops;
a maximum phase difference between the plurality of first BWPs; and
a maximum frequency difference between the plurality of first BWPs.

As can be seen from the technical solution of the above-mentioned embodiment, in the embodiment of this application, the frequency hopping is flexibly configured by obtaining the frequency hopping information, the first indication information, and the first activation information, to cause the reference signal sending apparatus to measure an SRS by the frequency hopping, so that an effective bandwidth for the SRS can be increased and accuracy of positioning measurement can be improved.

The reference signal sending apparatus in the embodiment of this application may be an electronic device, such as an electronic device with an operating system, or a component such as an integrated circuit or a chip in the electronic device. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in the embodiment of this application.

The reference signal sending apparatus according to the embodiment of this application can implement each process implemented in the method embodiment of FIG. 20, and achieve the same technical effect. To avoid repetition, details are not described herein.

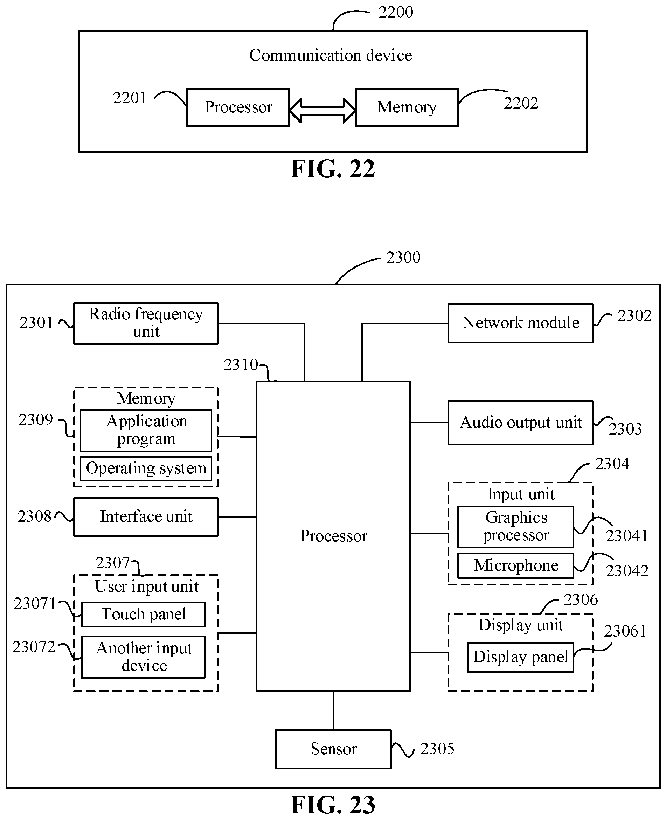

Optionally, as shown in FIG. 22, an embodiment of this application further provides a communication device 2200, including a processor 2201 and a memory 2202. The memory 2202 stores a program or instructions runnable on the processor 2201. For example, when the communication device 2200 is a terminal, the program or instructions, when executed by the processor 2201, implement each step of the above-mentioned reference signal sending method embodiment, which can achieve the same technical effect. When the communication device 2200 is a network side device, the program or instructions, when executed by the processor 2201, implement each step of the above-mentioned reference signal sending method embodiment, which can achieve the same technical effect. To avoid repetition, details are not described herein.

An embodiment of this application further provides a terminal, including a processor and a communication interface. The communication interface is configured to obtain first information, and send, on M first bandwidth parts BWPs, a sounding reference signal for positioning with frequency hopping based on the first information. The terminal embodiment corresponds to the above-mentioned terminal side method embodiment, and each implementation process and implementation of the above-mentioned method embodiment can be applied to the terminal embodiment, which can achieve the same technical effect. Specifically, FIG. 23 is a schematic diagram of a hardware structure of a terminal according to an embodiment of this application.

The terminal 2300 includes, but is not limited to, at least some components of a radio frequency unit 2301, a network module 2302, an audio output unit 2303, an input unit 2304, a sensor 2305, a display unit 2306, a user input unit 2307, an interface unit 2308, a memory 2309, and a processor 2310.

It can be understood by a person skilled in the art that the terminal 2300 may further include a power supply (such as a battery) for supplying power to various components. The power supply may be logically connected to the processor 2310 by using a power management system, so as to achieve charging, discharging, power consumption management and other functions by using the power management system. The terminal structure shown in FIG. 23 does not constitute a limitation on the terminal. The terminal may include more or fewer components than those shown, or combine some components, or have different component arrangements. Details are not described herein.

It should be understood that in the embodiment of this application, the input unit 2304 may include a graphics processing unit (Graphics Processing Unit, GPU) 23041 and a microphone 23042. The GPU 23041 processes image data of a still image or video that is obtained by an image acquisition apparatus (for example, a camera) in a video acquisition mode or an image acquisition mode. The display unit 2306 may include a display panel 23061, and the display panel 23061 may be configured in the form of a liquid crystal display, an organic light emitting diode, or the like. The user input unit 2307 includes at least one of a touch panel 23071 and another input device 23072. The touch panel 23071 is also referred to as a touchscreen. The touch panel 23071 may include two parts: a touch detection apparatus and a touch controller. The another input device 23072 may include, but is not limited to, a physical keyboard, a functional key (such as a volume control key or an on/off key), a track ball, a mouse, and a joystick, which is not described in detail herein.

In the embodiment of this application, after receiving downlink data from a network side device, the radio frequency unit 2301 may transmit the data to the processor 2310 for processing. In addition, the radio frequency unit 2301 may send uplink data to the network side device. Generally, the radio frequency unit 2301 includes, but is not limited to, an antenna, an amplifier, a transceiver, a coupler, a low noise amplifier, and a duplexer.

The memory 2309 may be configured to store a software program or instructions and various data. The memory 2309 may mainly include a first storage area for storing a program or instructions and a second storage area for storing data, where the first storage area may store an operating system, an application or instructions required for at least one function (such as a sound playing function and an image playing function), and the like. In addition, the memory 2309 may include a volatile memory or a non-volatile memory, or the memory 2309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 2309 in the embodiment of this application includes, but is not limited to, these and any other suitable types of memories.

The processor 2310 may include one or more processing units. Optionally, the processor 2310 integrates an application processor and a modem processor, where the application processor mainly processes operations involving an operating system, a user interface, an application program, and the like, and the modem processor mainly processes wireless communication signals, such as a baseband processor. It can be understood that, the modem processor may not be integrated into the processor 2310.

The radio frequency unit 2301 is configured to obtain first information; and send, on M first bandwidth parts BWPs, a sounding reference signal for positioning with frequency hopping based on the first information, where the frequency hopping includes N hops, each hop corresponds to a different narrowband, and M and N are positive integers.

Optionally, the first information includes at least one of the following:
frequency hopping information for indicating the frequency hopping;
first indication information, where the first indication information is used to indicate configuration information of L first BWPs; and
first activation information, where the first activation information is used to indicate activation information of the M first BWPs,
where L is a positive integer greater than or equal to M.

As can be seen from the technical solution of the above-mentioned embodiment, in the embodiment of this application, the sounding reference signal for positioning is sent on the M first BWPs with the frequency hopping based on the obtained first information, so that an effective bandwidth for the SRS can be increased and accuracy of positioning measurement can be improved.

Based on the above-mentioned embodiment, optionally, the first indication information includes at least one of the following:
second indication information, where the second indication information is used to indicate an enabling state of the L first BWPs;
BWP types of the L first BWPs;
monitoring information of the L first BWPs; and
set information of a first BWP set including the L first BWPs.

Optionally, the set information of the first BWP set includes at least one of the following:
a set identifier of the first BWP set;
the number of the first BWPs;
a BWP identifier of each first BWP; and
configuration information of the M first BWPs.

Optionally, in a case that one first BWP corresponds to multiple hops, the first indication information includes at least one of the following:
third indication information, where the third indication information is used to indicate an enabling state of the first BWP;
a BWP type of the first BWP;
monitoring information of the first BWP;
a BWP identifier of the first BWP;
frequency domain position information and/or bandwidth information of the first BWP; and
configuration information of the multiple hops corresponding to the first BWP.

Optionally, the configuration information of the multiple hops corresponding to the first BWP includes at least one of the following:
frequency domain position information and/or bandwidth information of each of the multiple hops corresponding to the first BWP;
common frequency domain position information of the multiple hops corresponding to the first BWP;
a frequency domain position offset between adjacent hops in frequency domain among the multiple hops corresponding to the first BWP;
an overlapping bandwidth between adjacent hops in frequency domain among the multiple hops corresponding to the first BWP; and
the number of the multiple hops corresponding to the first BWP.

Optionally, the frequency domain position information of each of the hops corresponding to the first BWP includes at least one of the following:
a frequency domain position of each of the multiple hops corresponding to the first BWP; and
a relative frequency domain position of each of the multiple hops corresponding to the first BWP, which corresponds to a common frequency domain position referred to by the corresponding common frequency domain position information.

Optionally, the frequency domain position information and/or bandwidth information of each of the multiple hops corresponding to the first BWP satisfies at least one of the following:
frequency domain positions of each of the multiple hops corresponding to the first BWP are the same or different;
bandwidth of each hop among the multiple hops corresponding to the first BWP is the same;
a minimum frequency domain offset between adjacent hops in frequency domain among the multiple hops corresponding to the first BWP is the same;
a frequency domain offset between adjacent hops in frequency domain among the multiple hops corresponding to the first BWP is the same;
a bandwidth corresponding to the first BWP is less than or equal to a first bandwidth threshold, or less than or equal to a second bandwidth threshold, where the first bandwidth threshold is greater than the second bandwidth threshold;
the bandwidth of each of the multiple hops correspond to the first BWP is less than or equal to the second bandwidth threshold; and
a total bandwidth of the multiple hops corresponding to the first BWP is less than or equal to the first bandwidth threshold.

Optionally, the multiple hops corresponding to the first BWP are associated with state information of the BWP states, where each BWP state is a state of the first BWP, and the state information of the BWP state is used to indicate the configuration information of the first BWP in the BWP state. Each BWP state corresponds to one hop, or each BWP state corresponds to multiple hops.

Optionally, in a case that each BWP state corresponds to multiple hops, state information of the BWP state includes at least one of a frequency domain offset or bandwidth information of the BWP state,
where the frequency domain offset is use to indicate a frequency domain offset of the first BWP between the multiple hops corresponding to the BWP state; and
the bandwidth information is used to indicate bandwidth information of the first BWP corresponding to the multiple hops in the BWP state.

Optionally, the configuration information of the M first BWPs includes at least one of the following:
frequency domain position information of the M first BWPs;
bandwidth information of the M first BWPs;
an overlapping bandwidth between the M first BWPs;
BWP identification of each first BWP;
frequency domain position information of each first BWP; and
bandwidth information of each first BWP.

Optionally, the terminal performs or does not perform one or more of the following operations on the M first BWPs:
skipping performing synchronization signal and PBCH block measurement;
monitoring downlink paging;
skipping monitoring downlink paging;
skipping sending a preamble;
skipping sending information A;
skipping transmitting on a physical uplink control channel;
skipping transmitting on a physical uplink shared channel; and
transmitting a sounding reference signal.

Optionally, the frequency hopping information includes at least one of the following:
a number N of the hops for the frequency hopping;
a hop identifier, where the hop identifier is used to indicate the hops for the frequency hopping;
a BWP identifier, where the BWP identifier is used to indicate the first BWP;
a state identifier, where the state identifier is used to indicate the BWP state, and the BWP state is a state of the first BWP;
first frequency domain position information, where the first frequency domain position information is used to indicate a frequency domain position of each hop;
first time domain location information, where the first time domain location information is used to indicate a time domain location of each hop;
a first period, where the first period is a period of the hops for the frequency hopping; and
first repetition configuration information, where the first repetition configuration information is used to indicate a repetition configuration of the hops for the frequency hopping.

Optionally, the number N of the hops is the number of narrowbands;
and/or
there is no overlap in time domain location between different hops;
   and/or
that there is no overlap in time domain location between different hops includes that a time domain gap between different hops is greater than a first time threshold, and the first time threshold is N1 symbols or N2 slots;
   and/or
there is partial overlap in the frequency domain positions between the different hops.

Optionally, the first frequency domain position information includes at least one of the following:
a bandwidth of each hop;
an initial frequency domain position of each hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by at least one of the following:
a bandwidth and/or an initial frequency domain position of a first BWP corresponding to the hop;
joint coding information of the bandwidth and/or the initial frequency domain position of the hop;
a frequency domain offset between initial frequency domain positions of adjacent hops in frequency domain; and
an overlapping bandwidth, where the overlapping bandwidth represents a bandwidth overlapping in frequency domain position between adjacent hops in frequency domain.

Optionally, the bandwidth and/or the initial frequency domain position of the hop is determined by the bandwidth and/or the initial frequency domain position of the first BWP corresponding to the hop, including at least one of the following:
the bandwidth and/or the initial frequency domain position of the hop is the bandwidth and/or the initial frequency domain position of the first BWP corresponding to the hop; and
the initial frequency domain position of the hop is determined relative to the initial frequency domain position of the first BWP corresponding to the hop.

Optionally, the bandwidth and/or the initial frequency domain position of each hop satisfies at least one of the following:
a frequency domain offset between initial frequency domain positions of adjacent hops in frequency domain is the same;
an initial frequency domain position of the hop with a lowest frequency domain position is the same as an initial frequency domain position of the sounding reference signal; and
bandwidths of different hops are the same.

Optionally, the first time domain location information includes at least one of the following:
a time domain location of each hop; and
a time domain location of a first hop,
where the time domain location includes at least one of the following:
a starting time domain location;
an ending time domain location; and
duration.

Optionally, the first time domain location information is determined by at least one of the following:
time domain location information of the sounding reference signal; and
activation information and/or configuration information of the first BWP.

Optionally, that the first time domain location information is determined by time domain location information of the sounding reference signal includes:
the first time domain location information is determined based on a slot offset or a starting time domain location of an aperiodic sounding reference signal,
   or
the first time domain location information is determined based on configuration information of a periodic or semi-static SRS.

Optionally, the first time domain location information satisfies at least one of the following:
a time domain length of the hop is greater than a transmission time of an SRS corresponding to the hop;
a starting time domain location of the hop is before a time at which the SRS corresponding to the hop is sent; and
the starting time domain location of the hop is before a first time gap corresponding to the hop.

Optionally, the activation information and/or the configuration information of the first BWP includes at least one of the following:
a time domain location P1 of the first activation information;
a time domain location P2 of the first indication information;
a time domain gap that is between adjacent hops in time domain and that is indicated by the first indication information;
a first offset K1, where the first offset is an offset corresponding to the first activation information and/or the first indication information, and
a second offset K2, where the second offset is an offset of first BWPs adjacent in time domain.

Optionally, the first time domain location information is used to determine activation information or an activation length of the first BWP.

Optionally, the first period is determined by one of the following manners:
a second period, where the second period is a period of the SRS; and
a third period, where the third period is a period of the first BWP.

Optionally, the first repetition configuration information includes at least one of the following:
a first repetition count, where the first repetition count is used to indicate a repetition count of each hop in a second period, and the second period is a period of the SRS; and
a time domain gap between adjacent repeated hops.

Optionally, the first indication information or the first activation information includes time domain candidate window information, and the time domain candidate window information is used to indicate a candidate time domain location corresponding to each hop or each first BWP,
where the time domain candidate window information includes at least one of the following:
duration;
a periodicity;
a starting time domain location;
a repetition configuration;
a BWP identifier of the first BWP;
a state identifier of a BWP state, where the BWP state is a state of the first BWP;
a first mapping mode, where the first mapping mode is used to indicate a mapping relationship between the hops for the frequency hopping and the first BWPs;
a second mapping model, where the first mapping mode is used to indicate a time domain mapping position of each hop under a time domain candidate window; and
a frequency hopping sequence of the M first BWPs.

Optionally, the first activation information further includes at least one of the following:
an indication of a first BWP corresponding to initial frequency hopping;
a first mapping mode, where the first mapping mode is used to indicate a mapping relationship between the hops for the frequency hopping and the first BWPs;
the number of activated first BWPs;
a frequency hopping sequence of the first BWPs; and
a list of the activated first BWPs.

Optionally, the frequency hopping sequence of the first BWPs is determined by one of the following manners:
indicating adjacent first BWPs;
an indicated switching sequence; and
a switching sequence agreed in a protocol,
where the indicated switching sequence is a relative sequence or an absolute sequence.

Optionally, the first activation information is further used to indicate switching from a currently activated BWP to the first BWP.

Optionally, the switching from a currently activated BWP to the first BWP includes: switching from the currently activated BWP to a first BWP nearest in frequency domain position, or a first BWP indicated by the first activation information, or a first BWP determined by a protocol and agreement.

Optionally, the first mapping mode includes at least one of the following:
a mapping rule between hops and first BWPs;
a mapping rule between the number of the hops and the first BWPs;
a mapping rule between a bandwidth and the first BWPs;
a mapping mode based on an association period, where the association period is obtained from an association relationship between a second period and a third period, or from an association relationship between the second period and a first period, where the first period is a period of the hops for the frequency hopping, the second period is a period of the SRS, and the third period is a period of the first BWPs; and
a mapping mode based on resources and/or repetition information of the SRS.

Optionally, a plurality of second periods are associated with one third period, or the plurality of second periods are associated with one first period.

Optionally, in a case that the first BWPs in the third period are discarded, or that the hops in the first period are discarded, the association period supports use of an extension manner, or the association period is discarded.

Optionally, in the mapping mode based on resources and/or repetition information of the SRS, one second period is associated with a plurality of third periods or a plurality of first periods; and/or each SRS resource corresponds to a plurality of first BWPs.

Optionally, the mapping mode based on resources and/or repetition information of the SRS includes: a mapping mode based on the number of symbols and/or the number of repetitions of the SRS resources.

Optionally, in a case that the number of repetitions is 1, the frequency hopping is intra-slot frequency hopping.

Optionally, in a case that the number of repetitions is greater than 1, the number of intra-slot frequency hopping groups is one of:
a ratio of the number of symbols to the number of repetitions of the SRS resources;
a ratio of the number of symbols of the SRS resources to the number of symbols corresponding to each hop;
the number of repetitions; and
a product of the number of intra-slot frequency hopping groups and the number of repetitions.

Optionally, a time domain gap between adjacent hops in time domain is greater than or equal to a first gap threshold,
or
a time domain gap between first BWPs adjacent in time domain is greater than or equal to the first gap threshold,
where the first gap threshold is determined by one of the following manners: a protocol agreement, a network side configuration, and a terminal capability.

Optionally, in a case that the unit of the first gap threshold is symbol or slot, an SCS associated with the first gap threshold is consistent with an SCS of at least one of the current following of the terminal:
a first BWP;
an activated BWP; and
an SRS.

Optionally, the terminal does not perform target communication behavior during frequency hopping switching by the terminal or under the first BWPs, where the target communication behavior includes at least one of the following:
receiving a downlink signal and/or from a downlink channel; and
transmitting an uplink signal and/or on an uplink channel.

Optionally, during a period in which the terminal sends the sounding reference signal, during frequency hopping switching by the terminal, or under the first BWPs, the terminal sends no SRS or does not switch to the BWPs in a case that the terminal overlaps or collides with a downlink signal and/or a downlink channel, and/or overlaps or collides with an uplink signal and/or an uplink channel.

Optionally, during a period in which the terminal sends the SRS, during frequency hopping switching by the terminal, or under the first BWPs, the terminal sends no sounding reference signal, or does not switch to the first BWPs, or abandons a second period of the SRS to enter an association period, in a case that the terminal overlaps or collides with an SSB.

Optionally, for a same sounding reference signal resource, in a case that the terminal cannot send the sounding reference signal on at least one hop, the terminal discards SRS transmission on all hops,
or
for the same SRS resource, in a case that different hops are associated with different Tx timing error groups, the terminal reports the Tx timing error groups,
where the Tx timing error groups are associated with at least one of the following:
a hop identifier;
a BWP identifier of the first BWP;
a state identifier of a state corresponding to the first BWP;
a frequency domain position; and
SRS identification information.

Optionally, the radio frequency unit 2301 is further configured to report a frequency hopping related capability of the terminal, and the frequency hopping related capability includes at least one of the following:
whether the terminal supports sending of the SRS by the frequency hopping;
a minimum time gap in switching time between two hops that are different or adjacent in time domain;
a maximum bandwidth of one hop;
a maximum bandwidth of the terminal for the frequency hopping;
a maximum time gap between multiple hops;
a maximum timing difference between the multiple hops, where the timing difference is used to indicate a synchronization relationship between the multiple hops;
a maximum phase difference between the multiple hops; and
a maximum frequency difference between the multiple hops.

Optionally, the frequency hopping related capability of the terminal includes at least one of the following:
a switching time of intra-band frequency hopping; and
a switching time of inter-band frequency hopping.

Optionally, the radio frequency unit 2301 is further configured to report a related capability of the first BWP, and the related capability of the first BWP includes at least one of the following:
whether the terminal supports sending of the SRS on the first BWP;
a minimum time gap in switching time between first BWPs that are different or adjacent in time domain;
a maximum bandwidth of the first BWPs;
a maximum bandwidth of all first BWPs;
a maximum bandwidth sum of the first BWPs;
a maximum time gap between a plurality of first BWPs;
a maximum timing difference between the plurality of first BWPs, where the timing difference is used to indicate a synchronization relationship between the multiple hops;
a maximum phase difference between the plurality of first BWPs; and
a maximum frequency difference between the plurality of first BWPs.

As can be seen from the technical solution of the above-mentioned embodiment, in the embodiment of this application, the frequency hopping is flexibly configured by obtaining the frequency hopping information, the first indication information, and the first activation information, to cause the terminal to send an SRS by the frequency hopping, so that an effective bandwidth for the SRS can be increased and accuracy of positioning measurement can be improved.

An embodiment of this application further provides a network side device, including a processor and a communication interface. The communication interface is configured to obtain first information, and the processor is configured to measure, on M first bandwidth parts, a sounding reference signal for positioning with frequency hopping based on the first information to obtain a positioning measurement result of a terminal. The network side device embodiment corresponds to the above-mentioned method embodiment for the network side device, and each implementation process and implementation of the above-mentioned method embodiment can be applied to the network side device embodiment, which can achieve the same technical effect.

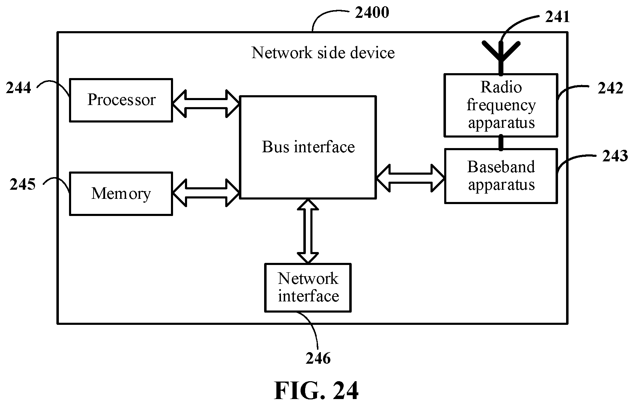

Specifically, an embodiment of this application further provides a network side device. As shown in FIG. 24, the network side device 2400 includes: an antenna 241, a radio frequency apparatus 242, a baseband apparatus 243, a processor 244 and a memory 245. The antenna 241 is connected to the radio frequency apparatus 242. In an uplink direction, the radio frequency apparatus 242 receives information through the antenna 241 and sends the received information to the baseband apparatus 243 for processing. In a downlink direction, the baseband apparatus 243 processes information to be sent and sends processed information to the radio frequency apparatus 242. The radio frequency apparatus 242 processes the received information and sends processed information through the antenna 241.

The method performed by the network side device in the above embodiment can be implemented in the baseband apparatus 243. The baseband apparatus 243 includes a baseband processor.

For example, the baseband apparatus 243 may include at least one baseband board, and a plurality of chips are arranged on the baseband board. As shown in FIG. 24, one of the chips is, for example, a baseband processor, and is connected to the memory 245 through a bus interface, so as to invoke a program in the memory 245 to perform an operation of a network device shown in the above method embodiment.

The network side device may further include a network interface 246. The interface is, for example, a common public radio interface (common public radio interface, CPRI).

Specifically, the network side device 2400 according to the embodiment of the present invention further includes: instructions or a program that is stored in the memory 245 and runnable on the processor 244. The processor 244 invokes the instructions or the program in the memory 245 to perform the method performed by each module shown in FIG. 19, to achieve the same technical effect. To avoid repetition, details are not described herein.

An embodiment of this application further provides a readable storage medium. A program or instructions are stored on the readable storage medium. The program or instructions, when executed by a processor, implement each process of the above-mentioned reference signal sending method embodiment, which can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or a compact disc.

An embodiment of this application further provides a chip. The chip includes a processor and a communication interface. The communication interface is coupled to the processor, and the processor is configured to run a program or instructions to implement each process of the above-mentioned reference signal sending method embodiment, which can achieve the same technical effect. To avoid repetition, details are not described herein.

It should be understood that the chip mentioned in the embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the above-mentioned reference signal sending method embodiment, which can achieve the same technical effect. To avoid repetition, details are not described herein.

An embodiment of this application further provides a reference signal sending system, including: a terminal and a network side device. The terminal may be configured to perform the steps of the reference signal sending method as described above. The network side device may be configured to perform the steps of the method as described above.

It should be noted that herein, terms "including", "comprising" or any other variants thereof are intended to cover non-exclusive inclusion, so that a process, method, article or apparatus including a series of elements includes not only those elements but also other elements not explicitly listed, or elements inherent to such a process, method, article or apparatus. Without further limitation, an element defined by the phrase "including a ..." does not exclude the presence of an additional identical element in the process, method, article or apparatus including the element. In addition, it should be noted that the scope of the method and apparatus in the implementations of this application is not limited to performing functions in the order shown or discussed, but also may include performing functions in a substantially simultaneous manner or in a reverse order based on the functions involved. For example, the described method may be performed in an order different from that described, and various steps may be further added, omitted or combined. In addition, features described with reference to some examples can be combined in other examples.

By the description of the above implementations, a person skilled in the art can clearly understand that the method in the above-mentioned embodiments may be implemented by software and a necessary general-purpose hardware platform, or certainly, by hardware, but the former is a better implementation in many cases. Based on this understanding, the technical solution of this application essentially, or a part contributing to the prior art, may be embodied in a form of a computer software product. The computer software product is stored on a storage medium (for example, a ROM/RAM, a magnetic disk and a compact disc), and includes a plurality of instructions to cause a terminal (which may be a mobile phone, a computer, a server, an air-conditioner, a network device, or the like) to perform the method according to each embodiment of this application.

The embodiments of this application are described above with reference to the accompanying drawings, but this application is not limited to the specific implementations described above, and the specific implementations described above are merely illustrative and not restrictive. A person of ordinary skill in the art may further make many forms under the teaching of this application without departing from the purpose of this application and the protection scope of the claims, and these forms all fall within the protection scope of this application.

## Claims

1. A reference signal sending method, comprising:
obtaining, by a terminal, first information; and
sending, by the terminal and on M first bandwidth parts, a sounding reference signal for positioning with frequency hopping based on the first information, wherein the frequency hopping comprises N hops, each hop corresponds to a different narrowband, and M and N are positive integers.

2. The method according to claim 1, wherein the first information comprises at least one of the following:
frequency hopping information for indicating the frequency hopping;
first indication information, wherein the first indication information is used to indicate configuration information of L first bandwidth parts; and
first activation information, wherein the first activation information is used to indicate activation information of the M first bandwidth parts,
wherein L is a positive integer greater than or equal to M.

3. The method according to claim 2, wherein the first indication information comprises at least one of the following:
second indication information, wherein the second indication information is used to indicate an enabling state of the L first bandwidth parts;
bandwidth part types of the L first bandwidth parts;
monitoring information of the L first bandwidth parts; and
set information of a first bandwidth part set comprising the L first bandwidth parts.

4. The method according to claim 3, wherein the set information of the first bandwidth part set comprises at least one of the following:
a set identifier of the first bandwidth part set;
the number of the first bandwidth parts;
a bandwidth part identifier of each first bandwidth part; and
configuration information of the M first bandwidth parts.

5. The method according to claim 2, wherein in a case that multiple hops correspond to a first bandwidth part, the first indication information comprises at least one of the following:
third indication information, wherein the third indication information is used to indicate an enabling state of the first bandwidth part;
a bandwidth part type of the first bandwidth part;
monitoring information of the first bandwidth part;
a bandwidth part identifier of the first bandwidth part;
frequency domain position information and/or bandwidth information of the first bandwidth part; and
configuration information of the multiple hops corresponding to the first bandwidth part.

6. The method according to claim 5, wherein the configuration information of the multiple hops corresponding to the first bandwidth part comprises at least one of the following:
frequency domain position information and/or bandwidth information of each of the multiple hops corresponding to the first bandwidth part;
common frequency domain position information of the multiple hops corresponding to the first bandwidth part;
a frequency domain position offset between adjacent hops in frequency domain among the multiple hops corresponding to the first bandwidth part;
an overlapping bandwidth between adjacent hops in frequency domain among the multiple hops corresponding to the first bandwidth part; and
the number of the multiple hops corresponding to the first bandwidth part.

7. The method according to claim 6, wherein the frequency domain position information of each of the hops corresponding to the first bandwidth part comprises at least one of the following:
a frequency domain position of each of the multiple hops corresponding to the first bandwidth part; and
a relative frequency domain position of each of the multiple hops corresponding to the first bandwidth part, which corresponds to a common frequency domain position referred to by the corresponding common frequency domain position information.

8. The method according to claim 6, wherein the frequency domain position information and/or bandwidth information of each of the multiple hops corresponding to the first bandwidth part satisfies at least one of the following:
frequency domain positions of each of the multiple hops corresponding to the first bandwidth part are the same or different;
bandwidth of each hop among the multiple hops corresponding to the first bandwidth part is the same;
a minimum frequency domain offset between adjacent hops in frequency domain among the multiple hops corresponding to the first bandwidth part is the same;
a frequency domain offset between adjacent hops in frequency domain among the multiple hops corresponding to the first bandwidth part is the same;
a bandwidth corresponding to the first bandwidth part is less than or equal to a first bandwidth threshold, or less than or equal to a second bandwidth threshold, wherein the first bandwidth threshold is greater than the second bandwidth threshold;
the bandwidth of each of the multiple hops correspond to the first bandwidth part is less than or equal to the second bandwidth threshold; and
a total bandwidth of the multiple hops corresponding to the first bandwidth part is less than or equal to the first bandwidth threshold.

9. The method according to claim 5, wherein the multiple hops corresponding to the first bandwidth part are associated with state information of bandwidth part states, wherein the bandwidth part states are states of the first bandwidth part, and each bandwidth part state corresponds to one hop, or each bandwidth part state corresponds to multiple hops.

10. The method according to claim 9, wherein in a case that each bandwidth part state corresponds to multiple hops, state information of the bandwidth part state comprises at least one of a frequency domain offset or bandwidth information of the bandwidth part state,
wherein the frequency domain offset is use to indicate a frequency domain offset of the first bandwidth part between the multiple hops corresponding to the bandwidth part state; and
the bandwidth information is used to indicate bandwidth information of the first bandwidth part corresponding to the multiple hops in the bandwidth part state.

11. The method according to claim 2, wherein the configuration information of the M first bandwidth parts comprises at least one of the following:
frequency domain position information of the M first bandwidth parts;
bandwidth information of the M first bandwidth parts;
an overlapping bandwidth between the M first bandwidth parts;
bandwidth part identification of each first bandwidth part;
frequency domain position information of each first bandwidth part; and
bandwidth information of each first bandwidth part.

12. The method according to claim 1, wherein the terminal performs or does not perform one or more of the following operations on the M first bandwidth parts:
skipping performing synchronization signal and PBCH block measurement;
monitoring downlink paging;
skipping monitoring downlink paging;
skipping sending a preamble;
skipping sending information A;
skipping transmitting on a physical uplink control channel;
skipping transmitting on a physical uplink shared channel; and
transmitting a sounding reference signal.

13. The method according to claim 2, wherein the frequency hopping information comprises at least one of the following:
a number N of hops for the frequency hopping;
a hop identifier, wherein the hop identifier is used to indicate the hops for the frequency hopping;
a bandwidth part identifier, wherein the bandwidth part identifier is used to indicate the first bandwidth part;
a state identifier, wherein the state identifier is used to indicate the bandwidth part state, and the bandwidth part state is a state of the first bandwidth part;
first frequency domain position information, wherein the first frequency domain position information is used to indicate a frequency domain position of each hop;
first time domain location information, wherein the first time domain location information is used to indicate a time domain location of each hop;
a first period, wherein the first period is a period of the hops for the frequency hopping; and
first repetition configuration information, wherein the first repetition configuration information is used to indicate a repetition configuration of the hops for the frequency hopping.

14. The method according to claim 13, wherein the number N of the hops is the number of narrowbands;
and/or
there is no overlap in time domain location between different hops;
and/or
there is no overlap in time domain location between the different hops, comprising that a time domain gap between different hops is greater than a first time threshold, and the first time threshold is N1 symbols or N2 slots;
and/or
there is partial overlap in the frequency domain positions between the different hops.

15. The method according to claim 13, wherein the first frequency domain position information comprises at least one of the following:
a bandwidth of each hop;
an initial frequency domain position of each hop;
a frequency domain offset between initial frequency domain position of adjacent hops in frequency domain; and
an overlapping bandwidth, wherein the overlapping bandwidth represents a bandwidth overlapping in frequency domain between adjacent hops in frequency domain.

16. The method according to claim 15, wherein the bandwidth and/or the initial frequency domain position of the hop is determined by at least one of the following:
a bandwidth and/or an initial frequency domain position of a first bandwidth part corresponding to the hop;
joint coding information of the bandwidth and/or the initial frequency domain position of the hop;
a frequency domain offset between initial frequency domain positions of adjacent hops in frequency domain; and
an overlapping bandwidth, wherein the overlapping bandwidth represents a bandwidth overlapping in frequency domain between adjacent hops in frequency domain.

17. The method according to claim 16, wherein the bandwidth and/or the initial frequency domain position of the hop is determined by the bandwidth and/or the initial frequency domain position of the first bandwidth part corresponding to the hop, comprising at least one of the following:
the bandwidth and/or the initial frequency domain position of the hop is the bandwidth and/or the initial frequency domain position of the first bandwidth part corresponding to the hop; and
the initial frequency domain position of the hop is determined relative to the initial frequency domain position of the first bandwidth part corresponding to the hop.

18. The method according to claim 15, wherein the bandwidth and/or the initial frequency domain position of each hop satisfies at least one of the following:
a frequency domain offset between initial frequency domain positions of adjacent hops in frequency domain position is the same;
an initial frequency domain position of the hop with a lowest frequency domain position is the same as an initial frequency domain position of the sounding reference signal; and
bandwidth of each hop for the hops is the same.

19. The method according to claim 13, wherein the first time domain location information comprises at least one of the following:
a time domain location of each hop; and
a time domain location of a first hop,
wherein the time domain location comprises at least one of the following:
a starting time domain location;
an ending time domain location; and
duration.

20. The method according to claim 13, wherein the first time domain location information is determined by at least one of the following:
time domain location information of the sounding reference signal; and
activation information and/or configuration information of the first bandwidth part.

21. The method according to claim 20, wherein that the first time domain location information is determined by time domain location information of the sounding reference signal comprises:
the first time domain location information is determined based on a slot offset or a starting time domain location of an aperiodic sounding reference signal,
or
the first time domain location information is determined based on configuration information of a periodic or semi-static sounding reference signal.

22. The method according to claim 21, wherein the first time domain location information satisfies at least one of the following:
a time domain length of the hop is greater than a transmission time of a sounding reference signal corresponding to the hop;
a starting time domain location of the hop is before a time at which the sounding reference signal corresponding to the hop is sent; and
the starting time domain location of the hop is before a first time gap corresponding to the hop.

23. The method according to claim 20, wherein the activation information and/or the configuration information of the first bandwidth part comprises at least one of the following:
a time domain location P1 of the first activation information;
a time domain location P2 of the first indication information;
a time domain gap that is between adjacent hops in time domain and that is indicated by the first indication information;
a first offset K1, wherein the first offset is an offset corresponding to the first activation information and/or the first indication information; and
a second offset K2, wherein the second offset is an offset of first bandwidth parts adjacent in time domain.

24. The method according to claim 13, wherein the first time domain location information is used to determine activation information or an activation length of the first bandwidth part.

25. The method according to claim 13, wherein the first period is determined by one of the following manners:
a second period, wherein the second period is a period of the sounding reference signal; and
a third period, wherein the third period is a period of the first bandwidth part.

26. The method according to claim 13, wherein the first repetition configuration information comprises at least one of the following:
a first repetition count, wherein the first repetition count is used to indicate a repetition count of each hop in a second period, and the second period is a period of the sounding reference signal; and
a time domain gap between adjacent repeated hops.

27. The method according to claim 2, wherein the first indication information or the first activation information comprises time domain candidate window information, and the time domain candidate window information is used to indicate a candidate time domain location corresponding to each hop or each first bandwidth part,
wherein the time domain candidate window information comprises at least one of the following:
duration;
a periodicity;
a staring time domain location;
a repetition configuration;
a bandwidth part identifier of the first bandwidth part;
a state identifier of a bandwidth part state, wherein the bandwidth part state is a state of the first bandwidth part;
a first mapping mode, wherein the first mapping mode is used to indicate a mapping relationship between the hops for the frequency hopping and the first bandwidth parts;
a second mapping model, wherein the first mapping mode is used to indicate a time domain mapping position of each hop under a time domain candidate window; and
a frequency hopping sequence of the first bandwidth parts.

28. The method according to claim 2 or 27, wherein the first activation information further comprises at least one of the following:
an indication of a first bandwidth part corresponding to initial frequency hopping;
a first mapping mode, wherein the first mapping mode is used to indicate a mapping relationship between the hops for the frequency hopping and the first bandwidth parts;
the number of activated first bandwidth parts;
a frequency hopping sequence of the first bandwidth parts; and
a list of the activated first bandwidth parts.

29. The method according to claim 28, wherein the frequency hopping sequence of the first bandwidth parts is determined by one of the following manners:
indicating adjacent first bandwidth parts;
an indicated switching sequence; and
a switching sequence agreed in a protocol,
wherein the indicated switching sequence is a relative sequence or an absolute sequence.

30. The method according to claim 2, wherein the first activation information is further used to indicate switching from a currently activated bandwidth part to the first bandwidth part.

31. The method according to claim 30, wherein the switching from a currently activated bandwidth part to the first bandwidth part comprises: switching from the currently activated bandwidth part to a first bandwidth part nearest in frequency domain position, or a first bandwidth part indicated by the first activation information, or a first bandwidth part determined by a protocol and agreement.

32. The method according to claim 28, wherein the first mapping mode comprises at least one of the following:
a mapping rule between the hops and the first bandwidth parts;
a mapping rule between the number of the hops and the first bandwidth parts;
a mapping rule between a bandwidth and the first bandwidth parts;
a mapping mode based on an association period, wherein the association period is obtained from an association relationship between a second period and a third period, or from an association relationship between the second period and a first period, wherein the first period is a period of the hops for the frequency hopping, the second period is a period of the sounding reference signal, and the third period is a period of the first bandwidth parts; and
a mapping mode based on resources and/or repetition information of the sounding reference signal.

33. The method according to claim 32, wherein a plurality of second periods are associated with one third period, or the plurality of second periods are associated with one first period.

34. The method according to claim 32, wherein in a case that the first bandwidth parts in the third period are discarded, or that the hops in the first period are discarded, the association period supports use of an extension manner, or the association period is discarded.

35. The method according to claim 32, wherein in the mapping mode based on resources and/or repetition information of the sounding reference signal, one second period is associated with a plurality of third periods or a plurality of first periods; and/or each sounding reference signal resource corresponds to a plurality of first bandwidth parts.

36. The method according to claim 32, wherein the mapping mode based on resources and/or repetition information of the sounding reference signal comprises: a mapping mode based on the number of symbols and/or the number of repetitions of the sounding reference signal resources.

37. The method according to claim 36, wherein in a case that the number of repetitions is 1, the frequency hopping is intra-slot frequency hopping.

38. The method according to claim 36, wherein in a case that the number of repetitions is greater than 1, the number of intra-slot frequency hopping groups is one of:
a ratio of the number of symbols to the number of repetitions of the sounding reference signal resources;
a ratio of the number of symbols of the sounding reference signal resources to the number of symbols corresponding to each hop;
the number of repetitions; and
a product of the number of intra-slot frequency hopping groups and the number of repetitions.

39. The method according to claim 1, wherein a time domain gap between adjacent hops in time domain is greater than or equal to a first gap threshold,
or
a time domain gap between first bandwidth parts adjacent in time domain is greater than or equal to the first gap threshold,
wherein the first gap threshold is determined by one of the following manners: a protocol agreement, a network side configuration, and a terminal capability.

40. The method according to claim 39, wherein in a case that a unit of the first gap threshold is symbol or slot, an SCS associated with the first gap threshold is consistent with an SCS of at least one of the current following of the terminal:
a first bandwidth part;
an activated bandwidth part; and
a sounding reference signal.

41. The method according to claim 1, wherein the terminal does not perform target communication behavior during frequency hopping switching by the terminal or under the first bandwidth parts, wherein the target communication behavior comprises at least one of the following:
receiving a downlink signal and/or from a downlink channel; and
transmitting an uplink signal and/or on an uplink channel.

42. The method according to claim 1, wherein during a period in which the terminal sends the sounding reference signal, during frequency hopping switching by the terminal, or under the first bandwidth parts, the terminal sends no sounding reference signal or does not switch to the first bandwidth parts in a case that the terminal overlaps or collides with a downlink signal and/or a downlink channel, and/or overlaps or collides with an uplink signal and/or an uplink channel.

43. The method according to claim 1, wherein during a period in which the terminal sends the sounding reference signal, during frequency hopping switching by the terminal, or under the first bandwidth parts, the terminal sends no sounding reference signal, or does not switch to the first bandwidth parts, or abandons a second period of the sounding reference signal to enter an association period, in a case that the terminal overlaps or collides with a synchronization signal and PBCH block.

44. The method according to claim 1, wherein for a same sounding reference signal resource, in a case that the terminal is unable to send the sounding reference signal on at least one hop, the terminal discards sending of the sounding reference signal on all hops,
or
for the same sounding reference signal resource, in a case that different hops are associated with different Tx timing error groups, the terminal reports the Tx timing error groups,
wherein the Tx timing error groups are associated with at least one of the following:
a hop identifier;
a bandwidth part identifier of the first bandwidth part;
a state identifier of a state corresponding to the first bandwidth part;
a frequency domain position; and
sounding reference signal identification information.

45. The method according to claim 1, wherein before the obtaining, by a terminal, first information, the method further comprises:
reporting, by the terminal, a frequency hopping related capability of the terminal, wherein the frequency hopping related capability of the terminal comprises at least one of the following:
whether the terminal supports sending of the sounding reference signal by the frequency hopping;
a minimum time gap in switching time between two hops that are different or adjacent in time domain;
a maximum bandwidth of one hop;
a maximum bandwidth of the terminal for the frequency hopping;
a maximum time gap between multiple hops;
a maximum timing difference between the multiple hops, wherein the timing difference is used to indicate a synchronization relationship between the multiple hops;
a maximum phase difference between the multiple hops; and
a maximum frequency difference between the multiple hops.

46. The method according to claim 45, wherein the frequency hopping related capability of the terminal comprises at least one of the following:
a switching time of intra-band frequency hopping; and
a switching time of inter-band frequency hopping.

47. The method according to claim 1, wherein before the obtaining, by a terminal, first information, the method further comprises:
reporting, by the terminal, a related capability of the first bandwidth parts, wherein the related capability of the first bandwidth parts comprises at least one of the following:
whether the terminal supports sending of the sounding reference signal on the first bandwidth parts;
a minimum time gap in switching time between first bandwidth parts that are different or adjacent in time domain;
a maximum bandwidth of the first bandwidth parts;
a maximum bandwidth of all first bandwidth parts;
a maximum bandwidth sum of the first bandwidth parts;
a maximum time gap between a plurality of first bandwidth parts;
a maximum timing difference between the plurality of first bandwidth parts, wherein the timing difference is used to indicate a synchronization relationship between multiple hops;
a maximum phase difference between the plurality of first bandwidth parts; and
a maximum frequency difference between the plurality of first bandwidth parts.

48. A reference signal sending apparatus, comprising:
a receiving module, configured to obtain first information; and
a sending module, configured to send, on M first bandwidth parts, a sounding reference signal for positioning with frequency hopping based on the first information, wherein the frequency hopping comprises N hops, each hop corresponds to a different narrowband, and M and N are positive integers.

49. A reference signal sending method, comprising:
obtaining, by a network side device, first information; and
measuring, by the network side device and on M first bandwidth parts, a sounding reference signal for positioning with frequency hopping based on the first information to obtain a positioning measurement result of a terminal, wherein the frequency hopping comprises N hops, each hop corresponds to a different narrowband, and M and N are positive integers.

50. The method according to claim 49, wherein the first information comprises at least one of the following:
frequency hopping information for indicating the frequency hopping;
first indication information, wherein the first indication information is used to indicate configuration information of L first bandwidth parts; and
first activation information, wherein the first activation information is used to indicate activation information of the M first bandwidth parts,
wherein L is a positive integer greater than or equal to M.

51. The method according to claim 50, wherein the first indication information comprises at least one of the following:
second indication information, wherein the second indication information is used to indicate an enabling state of the L first bandwidth parts;
bandwidth part types of the L first bandwidth parts;
monitoring information of the L first bandwidth parts; and
set information of a first bandwidth part set comprising the L first bandwidth parts.

52. The method according to claim 51, wherein the set information of the first bandwidth part set comprises at least one of the following:
a set identifier of the first bandwidth part set;
the number of the first bandwidth parts;
a bandwidth part identifier of each first bandwidth part; and
configuration information of the M first bandwidth parts.

53. The method according to claim 50, wherein in a case that multiple hops correspond to a first bandwidth part, the first indication information comprises at least one of the following:
third indication information, wherein the third indication information is used to indicate an enabling state of the first bandwidth part;
a bandwidth part type of the first bandwidth part;
monitoring information of the first bandwidth part;
a bandwidth part identifier of the first bandwidth part;
frequency domain position information and/or bandwidth information of the first bandwidth part; and
configuration information of the multiple hops corresponding to the first bandwidth part.

54. The method according to claim 53, wherein the configuration information of the multiple hops corresponding to the first bandwidth part comprises at least one of the following:
frequency domain position information and/or bandwidth information of each of the multiple hops corresponding to the first bandwidth part;
common frequency domain position information of the multiple hops corresponding to the first bandwidth part;
a frequency domain position offset between adjacent hops in frequency domain among the multiple hops corresponding to the first bandwidth part;
an overlapping bandwidth between adjacent hops in frequency domain among the multiple hops corresponding to the first bandwidth part; and
the number of the multiple hops corresponding to the first bandwidth part.

55. The method according to claim 54, wherein the frequency domain position information of each of the hops corresponding to the first bandwidth part comprises at least one of the following:
a frequency domain position of each of the multiple hops corresponding to the first bandwidth part; and
a relative frequency domain position of each of the multiple hops corresponding to the first bandwidth part, which corresponds to a common frequency domain position referred to by the corresponding common frequency domain position information.

56. The method according to claim 54, wherein the frequency domain position information and/or bandwidth information of each of the multiple hops corresponding to the first bandwidth part satisfies at least one of the following:
frequency domain positions of each of the multiple hops corresponding to the first bandwidth part are the same or different;
bandwidth of each hop among the multiple hops corresponding to the first bandwidth part is the same;
a minimum frequency domain offset between adjacent hops in frequency domain among the multiple hops corresponding to the first bandwidth part is the same;
a frequency domain offset between adjacent hops in frequency domain among the multiple hops corresponding to the first bandwidth part is the same;
a bandwidth corresponding to the first bandwidth part is less than or equal to a first bandwidth threshold, or less than or equal to a second bandwidth threshold, wherein the first bandwidth threshold is greater than the second bandwidth threshold;
the bandwidth of each of the multiple hops correspond to the first bandwidth part is less than or equal to the second bandwidth threshold; and
a total bandwidth of the multiple hops corresponding to the first bandwidth part is less than or equal to the first bandwidth threshold.

57. The method according to claim 53, wherein the multiple hops corresponding to the first bandwidth part are associated with state information of bandwidth part states, wherein the bandwidth part states are states of the first bandwidth part, and each bandwidth part state corresponds to one hop, or each bandwidth part state corresponds to multiple hops.

58. The method according to claim 57, wherein in a case that each bandwidth part state corresponds to multiple hops, state information of the bandwidth part state comprises at least one of a frequency domain offset or bandwidth information of the bandwidth part state,
wherein the frequency domain offset is use to indicate a frequency domain offset of the first bandwidth part between the multiple hops corresponding to the bandwidth part state; and
the bandwidth information is used to indicate bandwidth information of the first bandwidth part corresponding to the multiple hops in the bandwidth part state.

59. The method according to claim 50, wherein the configuration information of the M first bandwidth parts comprises at least one of the following:
frequency domain position information of the M first bandwidth parts;
bandwidth information of the M first bandwidth parts;
an overlapping bandwidth between the M first bandwidth parts;
bandwidth part identification of each first bandwidth part;
frequency domain position information of each first bandwidth part; and
bandwidth information of each first bandwidth part.

60. The method according to claim 50, wherein the frequency hopping information comprises at least one of the following:
the number N of the hops for the frequency hopping;
a hop identifier, wherein the hop identifier is used to indicate the hops for the frequency hopping;
a bandwidth part identifier, wherein the bandwidth part identifier is used to indicate the first bandwidth part;
a state identifier, wherein the state identifier is used to indicate the bandwidth part state, and the bandwidth part state is a state of the first bandwidth part;
first frequency domain position information, wherein the first frequency domain position information is used to indicate a frequency domain position of each hop;
first time domain location information, wherein the first time domain location information is used to indicate a time domain location of each hop;
a first period, wherein the first period is a period of the hops for the frequency hopping; and
first repetition configuration information, wherein the first repetition configuration information is used to indicate a repetition configuration of the hops for the frequency hopping.

61. The method according to claim 60, wherein the frequency domain position of the hop comprises a bandwidth and/or an initial frequency domain position of the hop, and the bandwidth and/or the initial frequency domain position of the hop is determined by at least one of the following:
a bandwidth and/or an initial frequency domain position of a first bandwidth part corresponding to the hop;
joint coding information of the bandwidth and/or the initial frequency domain position of the hop;
a frequency domain offset between initial frequency domain positions of adjacent hops in frequency domain; and
an overlapping bandwidth, wherein the overlapping bandwidth represents a bandwidth overlapping in frequency domain position between adjacent hops in frequency domain.

62. The method according to claim 61, wherein the bandwidth and/or the initial frequency domain position of the hop is determined by the bandwidth and/or the initial frequency domain position of the first bandwidth part corresponding to the hop, comprising at least one of the following:
the bandwidth and/or the initial frequency domain position of the hop is the bandwidth and/or the initial frequency domain position of the first bandwidth part corresponding to the hop; and
the initial frequency domain position of the hop is determined relative to the initial frequency domain position of the first bandwidth part corresponding to the hop.

63. The method according to claim 60, wherein the first time domain location information is determined by at least one of the following:
time domain location information of the sounding reference signal; and
activation information and/or configuration information of the first bandwidth part.

64. The method according to claim 60, wherein that the first time domain location information is determined by time domain location information of the sounding reference signal comprises:
the first time domain location information is determined based on a slot offset or a starting time domain location of an aperiodic sounding reference signal,
or
the first time domain location information is determined based on configuration information of a periodic or semi-static sounding reference signal, wherein the configuration information of the periodic or semi-static sounding reference signal comprises at least one of the following:
a second period and offset indication information, wherein the second period is a period of the sounding reference signal;
a starting time domain location of the sounding reference signal; and
a length of the sounding reference signal.

65. The method according to claim 60, wherein the activation information and/or the configuration information of the first bandwidth part comprises at least one of the following:
a time domain location P1 of the first activation information;
a time domain location P2 of the first indication information;
a time domain gap that is between adjacent hops in time domain and that is indicated by the first indication information;
a first offset K1, wherein the first offset is an offset corresponding to the first activation information and/or the first indication information; and
a second offset K2, wherein the second offset is an offset of first bandwidth parts adjacent in time domain.

66. The method according to claim 60, wherein the first time domain location information is used to determine activation information or an activation length of the first bandwidth part.

67. The method according to claim 52, wherein the first indication information or the first activation information comprises time domain candidate window information, and the time domain candidate window information is used to indicate a candidate time domain location corresponding to each hop or each first bandwidth part,
wherein the time domain candidate window information comprises at least one of the following:
duration;
a periodicity;
a starting time domain location;
a repetition configuration;
a bandwidth part identifier of the first bandwidth part;
a state identifier of a bandwidth part state, wherein the bandwidth part state is a state of the first bandwidth part;
a first mapping mode, wherein the first mapping mode is used to indicate a mapping relationship between the hops for the frequency hopping and the first bandwidth parts;
a second mapping model, wherein the first mapping mode is used to indicate a time domain mapping position of each hop under a time domain candidate window; and
a frequency hopping sequence of the first bandwidth parts.

68. The method according to claim 50 or 67, wherein the first activation information further comprises at least one of the following:
an indication of a first bandwidth part corresponding to initial frequency hopping;
a first mapping mode, wherein the first mapping mode is used to indicate a mapping relationship between the hops for the frequency hopping and the first bandwidth parts;
the number of activated first bandwidth parts;
a frequency hopping sequence of the first bandwidth parts; and
a list of the activated first bandwidth parts.

69. The method according to claim 68, wherein the first mapping mode comprises at least one of the following:
a mapping rule between the hops and the first bandwidth parts;
a mapping rule between the number of the hops and the first bandwidth parts;
a mapping rule between a bandwidth and the first bandwidth parts;
a mapping mode based on an association period, wherein the association period is obtained from an association relationship between a second period and a third period, or from an association relationship between the second period and a first period, wherein the first period is a period of the hops for the frequency hopping, the second period is a period of the sounding reference signal, and the third period is a period of the first bandwidth parts; and
a mapping mode based on resources and/or repetition information of the sounding reference signal.

70. The method according to claim 69, wherein a plurality of second periods are associated with one third period, or the plurality of second periods are associated with one first period.

71. The method according to claim 69, wherein in a case that the first bandwidth parts in the third period are discarded, or that the hops in the first period are discarded, the association period supports use of an extension manner, or the association period is discarded.

72. The method according to claim 69, wherein in the mapping mode based on resources and/or repetition information of the sounding reference signal, one second period is associated with a plurality of third periods or a plurality of first periods; and/or each sounding reference signal resource corresponds to a plurality of first bandwidth parts.

73. The method according to claim 69, wherein the mapping mode based on resources and/or repetition information of the sounding reference signal comprises: a mapping mode based on the number of symbols and/or the number of repetitions of the sounding reference signal resources.

74. The method according to claim 73, wherein in a case that the number of repetitions is 1, the frequency hopping is intra-slot frequency hopping.

75. The method according to claim 73, wherein in a case that the number of repetitions is greater than 1, the number of intra-slot frequency hopping groups is one of:
a ratio of the number of symbols to the number of repetitions of the sounding reference signal resources;
a ratio of the number of symbols of the sounding reference signal resources to the number of symbols corresponding to each hop;
the number of repetitions; and
a product of the number of intra-slot frequency hopping groups and the number of repetitions.

76. The method according to claim 49, wherein before the obtaining first information, the method further comprises:
receiving, by the network side device, a related capability of the first bandwidth parts from the terminal, wherein the related capability of the first bandwidth parts comprises at least one of the following:
whether the terminal supports sending of the sounding reference signal on the first bandwidth parts;
a minimum time gap in switching time between first bandwidth parts that are different or adjacent in time domain;
a maximum bandwidth of the first bandwidth parts;
a maximum bandwidth of all first bandwidth parts;
a maximum bandwidth sum of the first bandwidth parts;
a maximum time gap between a plurality of first bandwidth parts;
a maximum timing difference between the plurality of first bandwidth parts, wherein the timing difference is used to indicate a synchronization relationship between multiple hops;
a maximum phase difference between the plurality of first bandwidth parts; and
a maximum frequency difference between the plurality of first bandwidth parts.

77. A reference signal sending apparatus, comprising:
an obtaining module, configured to obtain first information; and
a measurement module, configured to measure, on M first bandwidth parts, a sounding reference signal for positioning with frequency hopping based on the first information to obtain a positioning measurement result of a terminal, wherein the frequency hopping comprises N hops, each hop corresponds to a different narrowband, and M and N are positive integers.

78. A terminal, comprising a processor and a memory, wherein the memory stores a program or instructions runnable on the processor, and the program or instructions, when executed by the processor, implement the steps of the reference signal sending method according to any one of claims 1 to 47.

79. A network side device, comprising a processor and a memory, wherein the memory stores a program or instructions runnable on the processor, and the program or instructions, when executed by the processor, implement the steps of the reference signal sending method according to any one of claims 49 to 76.

80. A readable storage medium, wherein the readable storage medium stores a program or instructions, and the program or instructions, when executed by a processor, implement the steps of the reference signal sending method according to any one of claims 1 to 48 or the reference signal sending method according to any one of claims 49 to 76.
